# EUROPÄISCHE PATENTSCHRIFT

(11) **EP 4 217 270 B1**
(45) Veröffentlichungstag und Bekanntmachung des Hinweises auf die Patenterteilung: **29.11.2023**
(21) Anmeldenummer: 21789658.8
(22) Anmeldetag: 05.10.2021
(51) Int. Cl.: B64C 1/14, E05B 47/02, E05B 63/24, E05C 9/04, E05B 15/02, B64D 11/02

(54) **TÜRANORDNUNG MIT SCHLOSSAKTUATOR ZUR INTEGRATION IN EINEM FLUGZEUG**
DOOR ARRANGEMENT WITH LOCK ACTUATOR FOR INTEGRATION IN AN AIRCRAFT
ENSEMBLE PORTE À ACTIONNEUR DE SERRURE À INTÉGRER DANS UN AÉRONEF

(30) Priorität: 12.11.2020 DE 102020129818
(43) Veröffentlichungstag der Anmeldung: 02.08.2023
(73) Patentinhaber: Diehl Aviation Laupheim GmbH, 88471 Laupheim (DE); Diehl Aviation Gilching GmbH, 82205 Gilching (DE)
(72) Erfinder: MÜLLER, Björn, 22391 Hamburg (DE); ZAGER-RODE, Florian, 21614 Buxtehude (DE); MÜLLER, Wolfgang, 81247 München (DE)
(74) Vertreter: Diehl Patentabteilung
(86) Internationale Anmeldenummer: PCT/EP2021/077400
(87) Internationale Veröffentlichungsnummer: WO 2022/100931

(56) Entgegenhaltungen:
- EP-A1- 0 640 735
- JP-A- H04 151 399
- US-A1- 2002 092 951
- US-A1- 2005 224 649
- US-A1- 2020 115 029
- US-A1- 2020 224 462

## Beschreibung

Die Erfindung betrifft eine Türanordnung für einen Raum in einem Flugzeug, wobei die Tür eine Verriegelungsanordnung aufweist, die eine Türbewegung der Tür erlaubt oder unterbindet.

Türen für Räume wie z.B. Waschräume in Flugzeugen sind oftmals per Hand zu öffnen, zu schließen und zu verriegeln. Aus dem Stand der Technik sind auch bereits Türen für Waschräume in Flugzeugen bekannt geworden, die automatisch und berührungslos geöffnet und geschlossen werden können.

Beispielsweise beschreibt die Druckschrift DE 10 2018 113 132 A1 eine Vorrichtung zum Betätigen einer Tür für Toilettenkabinen an Bord von Fahrzeugen. Die Vorrichtung umfasst eine Bedieneinheit zum Erzeugen eines Steuersignals in Abhängigkeit einer Bedientätigkeit eines Insassen des Fahrzeugs sowie eine Stellvorrichtung zum elektromotorischen Betätigen der Tür in Abhängigkeit des Steuersignals. Die Bedieneinheit weist eine Sensoranordnung zum Erfassen einer Geste des Insassen als Bedientätigkeit auf, sodass eine berührungsfreie Bedienung der Vorrichtung möglich ist.

In dem Patent US 4,994,722 ist ein System zum automatischen Verriegeln einer Tür eines Waschraums in einem Flugzeug von einem entfernten Ort aus beschrieben. Das System umfasst Mittel zum Aktivieren des Systems, Mittel zur Erfassung einer Anwesenheit einer Person in dem Waschraum, Mittel zum Verriegeln des unbesetzten Waschraums und Mittel zum selektiven Außerkraftsetzen des Systems, um einer autorisierten Person Zutritt zu dem Waschraum zu gewähren.

Die US 2020/224 462 A1 offenbart eine Türanordnung für ein Flugzeug gemäß dem Oberbegriff des Anspruchs 1 mit einer Verriegelungsanordnung, die sowohl manuell mit einem ersten Mechanismus als auch automatisch mit einem zweiten Mechanismus betrieben werden kann.

Es ist Aufgabe der vorliegenden Erfindung, Verbesserungen in Bezug auf eine Tür für einen Raum in einem Flugzeug mit Verriegelungsanordnung vorzuschlagen.

Die Aufgabe wird durch eine Türanordnung gemäß Anspruch 1 gelöst. Bevorzugte oder vorteilhafte Ausführungsformen der Erfindung ergeben sich aus den abhängigen Ansprüchen, der nachfolgenden Beschreibung sowie den beigefügten Figuren.

Die Türanordnung dient zur Integration in einem Flugzeug. Die Türanordnung enthält eine Wandstruktur. Die Wandstruktur ist dazu eingerichtet, einen bestimmungsgemäßen Raum des Flugzeuges zumindest abschnittsweise zu umschließen. "Bestimmungsgemäß" ist so zu verstehen, dass die Wandstruktur an ein entsprechendes Flugzeug oder einen bestimmten Typ von Flugzeug angepasst ist, insbesondere geometrisch / hinsichtlich ihrer Materialien und Abmessungen, usw. so dass die Wandstruktur schlussendlich einen Teil des fertig gestellten Flugzeuges bilden kann.

Die Türanordnung enthält eine in der Wandstruktur angeordnete Türe für den Raum. Die Wandstruktur weist einen seitlich neben der Türe angeordneten Wandabschnitt auf. Die Türe weist mindestens ein Türblatt auf, das relativ zum Wandabschnitt zwischen einer Schließstellung und einer Öffnungsstellung verschwenkbar ist.

Die Türanordnung enthält eine Verriegelungsanordnung für die Türe. Die Verriegelungsanordnung enthält eine Verriegelungsvorrichtung, die in dem Türblatt angeordnet ist. Die Verriegelungsvorrichtung enthält ein Blockierelement. Das Blockelement ist beweglich. Durch seine Bewegung in eine Blockierrichtung ist es in eine Blockierstellung überführbar, in welcher eine Bewegung der Türe in der Schließstellung blockiert ist. Die Türe kann dann also nicht aus der Schließstellung heraus bewegt werden, ist mit anderen Worten in der Schließstellung gehalten bzw. verriegelt. Durch Bewegung des Blockelements entgegen der Blockierrichtung ist dieses in eine Bewegungsstellung überführbar, in welcher die Bewegung der Türe aus der Schließstellung heraus möglich ist.

Die Verriegelungsvorrichtung umfasst also ein Blockierelement, welches zur Blockierung der Türbewegung der Türe ausgebildet ist. Hierfür ist das Blockierelement in eine Blockierstellung, in welcher die Türbewegung blockiert ist, und in eine Bewegungsstellung, in welcher die Türbewegung möglich ist, überführbar. Vorzugsweise kann die Türe in der Blockierstellung nicht durch die Öffnungsbewegung geöffnet werden und nicht durch die Schließbewegung geschlossen werden. Bevorzugt kann die Türe in der Bewegungsstellung von der Öffnungsstellung in die Schließstellung und umgekehrt bewegt werden. Beispielsweise ist das Blockierelement als ein Blockierbolzen oder als ein Blockierriegel ausgebildet.

Die Verriegelungsanordnung enthält einen Schlossaktuator, der im Wandabschnitt angeordnet ist. Der Schlossaktuator enthält ein erstes mechanisches Stellelement, das insbesondere als erster Bolzen ausgeführt ist. Das Stellelement ist mit dem Blockierelement unverbunden und dazu eingerichtet, das Blockierelement durch mechanischen Anlage-Druck von der Bewegungsstellung in die Blockierstellung oder von der Blockierstellung in die Bewegungsstellung zu überführen. "Unverbunden / Anlage-Druck" ist so zu verstehen, dass keine irgendwie geartete feste oder bewegliche Verbindung zwischen beiden Teilen (Stellelement, Blockierelement) besteht. Eine Bewegung des Blockierelement kann das Stellelement ausschließlich dadurch erzeugen, dass es - unmittelbar oder mittelbar über die Zwischenschaltung anderer mechanischer Elemente - Druck auf das Blockierelement ausübt. Eine Ausübung von Zug auf das Blockierelement ist also unmöglich. Der Druck wird alleine durch eine mechanische lose Anlage in der Kraftübertragungskette zwischen Stellelement und Blockierelement in der Richtung vom Stellelement zum Blockierelement hin bewerkstelligt.

Gemäß der Erfindung ist das erste Stellelement dazu ausgebildet, ausschließlich eine Druckkraft auf das Blockierelement zu übertragen, insbesondere um die Türbewegung zu blockieren und um die Türe zu verriegeln. Weiterhin ist das zweite Stellelement dazu ausgebildet, ausschließlich eine Druckkraft auf das Verschlusselement zu übertragen, insbesondere um die Türe zu entriegeln und um die Türbewegung freizugeben. Das erste Stellelement übt also keine Zugkraft unmittelbar auf das Blockierelement aus und das zweite Stellelement übt keine Zugkraft unmittelbar auf das Verschlusselement aus. Eine mittelbare Ausübung von Zug über den Umweg des jeweils anderen Elements ist jedoch möglich. Insbesondere sind das Verschlusselement und das Blockierelement ausschließlich durch ein Verschieben, insbesondere nicht durch ein Ziehen, in die Blockier- und Bewegungsstellung bzw. in die Verriegelungs- und Entriegelungsstellung überführbar.

Gemäß der Erfindung ist es möglich, die Verriegelungsanordnung einer Tür, welche im Türblatt integriert ist, durch mechanischen Angriff von außerhalb des Türblatts, nämlich aus dem in der Schließstellung benachbarten Wandabschnitt heraus, zu bedienen, insbesondere zu verriegeln oder zu entriegeln. Ein entsprechender Mechanismus im Türblatt ist daher nicht notwendig.

Erfindungsgemäß enthält die Verriegelungsvorrichtung also ein Verschlusselement.

Das Verschlusselement ist durch Bewegung in eine Verschlussrichtung in eine Verriegelungsstellung überführbar, in welcher die Türe verriegelt ist. Durch Bewegung entgegen der Verschlussrichtung ist das Verschlusselement in eine Entriegelungsstellung überführbar, in der die Türe entriegelt ist. Die Verschlussrichtung ist insbesondere eine parallele gleichsinnige oder insbesondere parallele gegensinnige, also Gegenrichtung, zur Blockierrichtung.

Beispielsweise ist das Verschlusselement als ein Verschlussbolzen oder als ein Verschlussriegel ausgebildet.

Der Schlossaktuator enthält dann das oben genannte zweite mechanische Stellelement. Entsprechend dem ersten Stellelement ist auch das zweite Stellelement mit dem Verschlusselement unverbunden. Weiterhin ist es dazu eingerichtet, das Verschlusselement durch mechanischen Anlage-Druck von der Entriegelungsstellung in die Verriegelungsstellung und / oder von der Verriegelungsstellung in die Entriegelungsstellung zu überführen.

Die mechanische "Unverbundenheit" gilt im Falle von zwei Stellelementen insbesondere auch kreuzweise, d.h. auch das zweite Stellelement ist mit dem Blockierelement unverbunden und das erste Stellelement ist mit dem Verschlusselement unverbunden.

Gemäß der Erfindung lassen sich auch Türen mit entsprechend zusätzlichem Verschlusselement hinsichtlich ihrer Verriegelungsvorrichtung durch den Schlossaktuator betätigen, wie sinngemäß oben bereits in Bezug auf das Blockierelement erläutert wurde.

In einer bevorzugten Ausführungsform sind beide mechanische Stellelemente in der Schließstellung der Tür in Richtung zur Verriegelungsvorrichtung hin und zurück bewegbar. Durch eine entsprechende Bewegungsrichtung ist eine unverbundene mechanische Druck-Beeinflussung der Verriegelungsvorrichtung durch den Schlossaktuator mechanisch besonders einfach ausführbar.

Erfindungsgemäß sind das erste Stellelement und das zweite Stellelement dazu eingerichtet, (insbesondere ausschließlich) synchron gegenläufig linear bewegt zu werden, insbesondere auf parallelen Bewegungsbahnen. Eine derartige Bewegungsführung der Stellelemente ist in der Türanordnung besonders vorteilhaft.

Das zweite Stellelement ist synchron und folglich simultan mit der Bewegung des ersten Stellelements in eine erste lineare Richtung durch eine Wirkverbindung, z.B. mittels des ersten Zahnrads, in eine zweite lineare Richtung bewegbar. Das zweite Stellelement ist auch synchron und simultan mit der Bewegung des ersten Stellelements in die zweite lineare Richtung durch die Wirkverbindung in die erste lineare Richtung bewegbar.

Die beiden Stellelemente sind wirkverbunden.

Durch die Wirkverbindung wird insbesondere eine Zwangskoppelung erreicht, mittels der beide Stellelemente ausschließlich simultan und synchron gegenläufig bewegbar sind. Vorzugsweise sind beide Stellelemente über ein erstes Kopplungsmittel des Schlossaktuators, z.B. über ein erstes Zahnrad, miteinander wirkverbunden und so gekoppelt. Insbesondere weist jedes der Stellelemente eine Außenverzahnung auf, mit welcher das erste Zahnrad kämmen kann. Bevorzugt ist das erste Zahnrad zwischen beide Stellelementen angeordnet, sodass es mit der Außenverzahnung auf einer Oberseite eines der Stellelemente und mit der Außenverzahnung auf einer Unterseite des anderen Stellelementes kämmen kann, wobei die Unterseite insbesondere zu dem Boden des Raums gerichtet ist.

In einer bevorzugten Ausführungsform ist das erste Stellelement linear fluchtend zu der Blockierrichtung bewegbar und das zweite Stellelement ist linear fluchtend zu der Verschlussrichtung bewegbar. Insbesondere liegt eine reine bzw. ausschließliche lineare Bewegbarkeit der Stellelemente in lineare Richtungen vor, um jeweils das Blockierelement und das Verschlusselement zu verschieben. Eine derartige Beweglichkeit der Stellelemente ist mechanisch besonders einfach realisierbar, insbesondere für Stellelemente in Form von Bolzen.

In einer möglichen konstruktiven Realisierung der Erfindung ist das erste Stellelement linear fluchtend mit dem Blockierelement angeordnet. Vorzugsweise ist das zweite Stellelement linear fluchtend mit dem Verschlusselement angeordnet. Das erste Stellelement und das Blockierelement sind unverbunden, also endseitig nicht aneinander befestigt. Insbesondere ist das Blockierelement mit einem in die Verschlussrichtung gerichteten Ende benachbart zu einem oder angrenzend an ein in die Blockierrichtung gerichtetes Ende des ersten Stellelements angeordnet. Das zweite Stellelement und das Verschlusselement sind unverbunden, insbesondere endseitig nicht aneinander befestigt. Insbesondere ist das Verschlusselement mit einem in die Verschlussrichtung gerichteten Ende benachbart zu einem oder angrenzend an ein in die Blockierrichtung gerichtetes Ende des zweiten Stellelements angeordnet.

In einer möglichen konstruktiven Umsetzung der Erfindung sind das in die Blockierrichtung gerichtete Ende des ersten Stellelements und das in die Gegenrichtung hierzu gerichtete Ende des Blockierelements in der Bewegungsstellung beabstandet zueinander oder angrenzend aneinander in einem Spalt zwischen dem Türblatt und dem Wandabschnitt angeordnet. In einer weiteren möglichen konstruktiven Umsetzung der Erfindung sind das in die Blockierrichtung gerichtete Ende des zweiten Stellelements und das in die Gegenrichtung hierzu gerichtete Ende des Verschlusselements in der Entriegelungsstellung beabstandet zueinander oder angrenzend aneinander in dem Spalt zwischen dem Türblatt und dem Wandabschnitt angeordnet. Somit ist in vorteilhafter Weise gewährleistet, dass die Türe oder das Türblatt relativ zu dem Wandabschnitt zur Öffnung oder Schließung der Tür geschwenkt werden kann.

In einer bevorzugten Ausführungsform sind das Verschlusselement und das Blockierelement derart bewegungsgekoppelt, dass sie ausschließlich synchron gegenläufig linear bewegbar sind. Die entsprechenden Aussagen zu den entsprechend bewegten Verschlusselementen gelten hier sinngemäß. Wegen der entsprechenden Zwangskopplung von Blockierelement und Verschlusselement bewirkt daher ein Druck durch eines der Stellelemente auf das Blockierelement oder das Verschlusselement eine jeweilige Zwangsbewegung des jeweils anderen Elements, also des Verschlusselements oder des Blockierelement. Für eine Bewegung von Blockierelement und Verschlusselement in jeweils eine Richtung reicht daher auch ein einziges Stellelement aus. Durch die entsprechende Zwangskopplung von Blockierelement und Verschlusselement und zwei Stellelemente, die auf jeweils eines von Blockierelement und Verschlusselement wirken, kann so alleine durch Druck eine Bewegung von Blockierelement und Verschlusselement in deren jeweils beide mögliche Bewegungsrichtungen (in und entgegen der Blockierer Richtung und Verschlussrichtung) erfolgen.

Bevorzugt ist es im Rahmen der Erfindung also, dass das Blockierelement und das Verschlusselement über ein Kopplungsmittel, z.B. über ein zweites Zahnrad, wirkverbunden sind. Vorzugsweise weisen das Blockierelement und das Verschlusselement zur Kopplung mit dem zweiten Zahnrad auf ihren aufeinander zu gerichteten Außenseiten Außenverzahnungen auf, mit denen das zweite Zahnrad kämmen kann. Insbesondere sind das Verschlusselement und das Blockierelement synchron und/oder simultan gegenläufig linear bewegbar. Insbesondere ist das Blockierelement in die Blockierrichtung linear bewegbar, um es von der Bewegungsstellung in die Blockierstellung zu überführen. Bevorzugt ist das Verschlusselement synchron und/oder simultan zu der Bewegung des Blockierelements (in die Blockierrichtung) in eine Verschlussrichtung linear bewegbar, um es von der Entriegelungsstellung in die Verriegelungsstellung zu überführen.

Insbesondere ist das Verschlusselement entgegen der Verschlussrichtung linear bewegbar, um es von der Verriegelungsstellung in die Entriegelungsstellung zu überführen. Insbesondere ist das Blockierelement synchron und/oder simultan zu der Bewegung des Verschlusselements (entgegen der Verschlussrichtung) entgegen der Blockierrichtung linear bewegbar, um es von der Blockierstellung in die Bewegungsstellung zu überführen.

Eine bevorzugte Umsetzung der Erfindung sieht vor, dass die Verriegelungsanordnung eine elektrische Antriebseinrichtung, insbesondere mit einem Elektromotor, umfasst, welcher einen Rotor und einen Stator umfasst. Die Antriebseinrichtung ist nicht selbsthemmend ausgebildet, um jeweils durch externe Kräfte bewegbar zu sein. Insbesondere ist der Elektromotor dazu ausgebildet, ein Drehmoment zu erzeugen und dieses als lineare Kraft, insbesondere in Abhängigkeit einer Drehrichtung eines Rotors des Elektromotors, auf das ersten Stellelement zu übertragen. Bevorzugt kann das erste Stellelement translatorisch, insbesondere in eine erste lineare Richtung und entgegengesetzt zurück in eine zweite lineare Richtung bewegt werden. Vorzugsweise entspricht die erste lineare Richtung der Blockierrichtung und die zweite lineare Richtung der Verschlussrichtung. Zur Umwandlung des Drehmoments in die lineare Kraft und/oder zur nicht-selbsthemmenden Übertragung der linearen Kraft auf das erste Stellelement weist die Antriebseinrichtung zum Beispiel eine Spindeleinrichtung, insbesondere in der Ausbildung als Steilgewindespindel, auf. Beispielsweise ist die Spindeleinrichtung form- und/oder kraftschlüssig mit dem ersten Stellelement verbunden. Alternativ oder optional ergänzend weist die Antriebseinrichtung ein Getriebe zur Umwandlung, Übertragung und/oder Übersetzung des Drehmoments in die lineare Kraft auf.

Alternativ ist es im Rahmen der Erfindung möglich, dass die elektrische Antriebseinrichtung einen Linearaktuator umfasst. Vorzugsweise ist der Linearaktuator dazu ausgebildet, eine Linearbewegung zu erzeugen und als die lineare Kraft auf das ersten Stellelement zu übertragen, insbesondere um dieses translatorisch in die erste lineare Richtung und zurück in die zweite lineare Richtung zu bewegen. Auch der Linearaktuator ist dann nicht selbsthemmend ausgebildet.

Im Rahmen der Erfindung kann es alternativ vorgesehen sein, dass der Elektromotor oder der Linearaktuator die lineare Kraft auf das zweite Stellelement überträgt, um dieses translatorisch in die erste lineare Richtung und entgegengesetzt in die zweite lineare Richtung zu bewegen.

Im Rahmen der Erfindung ist es vorzugsweise vorgesehen, dass das erste Stellelement z.B. mittels der Antriebseinrichtung zur Bewegung, insbesondere zum Verschieben des Blockierelements in die Blockierrichtung, in die erste lineare Richtung bewegbar ist. Synchron und/oder simultan zu der Bewegung des Blockierelements in die Blockierrichtung ist das Verschlusselement aufgrund der Wirkverbindung über das zweite Zahnrad vorzugsweise in die Verschlussrichtung. Das zweite Stellelement ist synchron und simultan zu der der Bewegung des ersten Stellelements in die erste lineare Richtung in die zweite lineare Richtung bewegbar, wobei das zweite Stellelement zusätzlich und/oder zugleich von dem sich in die Verschlussrichtung bewegenden Verschlusselement in die zweite lineare Richtung verschiebbar ist. Insbesondere ist das Blockierelement somit durch die Bewegung des ersten Stellelements in die erste lineare Richtung und die damit verbundene Ausübung der Druckkraft des ersten Stellelements auf das Blockierelement in die Blockierstellung überführbar, wobei das Verschlusselement synchron und/oder simultan in die Verriegelungsstellung überführbar ist.

Bevorzugt ist es im Rahmen der Erfindung weiterhin vorgesehen, dass das zweite Stellelement zur Bewegung, insbesondere zum Verschieben des Verschlusselements in die Blockierrichtung, in die erste lineare Richtung bewegbar ist. Hierzu ist das erste Stellelement insbesondere durch Umkehr der Drehrichtung des Rotors des Elektromotors z.B. mittels der Antriebseinrichtung, in die zweite lineare Richtung bewegbar, sodass das zweite Stellelement synchron und/oder simultan in die erste lineare Richtung bewegbar ist. Das Blockierelement ist synchron und/oder simultan zu der Bewegung des Verschlusselements in die Blockierrichtung aufgrund der Wirkverbindung über das zweite Zahnrad vorzugsweise in die Verschlussrichtung bewegbar. Insbesondere ist das Verschlusselement somit durch die Bewegung des ersten Stellelements in die zweite lineare Richtung, die dadurch erzeugte Bewegung des zweiten Stellelements in die erste lineare Richtung und die damit verbundene Ausübung der Druckkraft des zweiten Stellelements auf das Verschlusselement in die Entriegelungsstellung überführbar, wobei das Blockierelement synchron und/oder simultan in die Bewegungsstellung überführbar ist.

Optional ergänzend umfasst die Verriegelungsanordnung eine Hinweiseinrichtung mit einem Hinweiselement. Vorzugsweise ist das Hinweiselement zur Ausgabe eines Hinweises ausgebildet, mittels dem einem Nutzer der Türe, insbesondere von außerhalb und/oder innerhalb des Raums, mitgeteilt werden kann, ob die Türe verriegelt oder entriegelt ist. Insbesondere sind mehrere, z.B. zwei Hinweise aufeinanderfolgend auf dem Hinweiselement angeordnet. Bevorzugt ist das Hinweiselement mit dem Verschlusselement gekoppelt und gemeinsam mit diesem beweglich, sodass es in der Verriegelungsstellung des Verschlusselements den Hinweis "Belegt" ausgibt und in der Entriegelungsstellung des Verschlusselements den Hinweis "Unbelegt" oder "Frei" ausgibt. Beispielsweise weist das Türblatt eine Aussparung auf, wobei das Hinweiselement hinter und seitlich neben der Aussparung in die Blockierrichtung und in die Gegenrichtung hierzu beweglich angeordnet ist, sodass der passende Hinweis durch die Aussparung hindurch ausgegeben werden kann.

In einer möglichen Ausgestaltung der Erfindung ist die Verriegelungsvorrichtung ergänzend zu der Betätigung durch den Schlossaktuator auch manuell betätigbar. Dies ist insbesondere durch die nicht-selbsthemmende Ausbildung der Antriebseinrichtung möglich. Zur manuellen Betätigung weist die Verriegelungsvorrichtung z.B. ein Griffelement auf, welches verdeckt und insbesondere zur Betätigung freilegbar an der Türe, insbesondere auf einer nach außerhalb des Raums gerichteten Außenseite und auf einer gegenüberliegenden Innenseite der Türe, angeordnet ist. Vorzugsweise steht das Griffelement mit dem Verschlusselement in einer direkten oder indirekten Wirkverbindung. Dadurch ist das Verschlusselement und somit auch das wirkverbundene Blockierelement mittels des Griffelements in die Blockierrichtung und die Gegenrichtung hierzu bewegbar, um die Türe zu verriegeln und die Türbewegung zu blockieren und um die Türe zu entriegeln und die Türbewegung freizugeben.

Beispielsweise ist die Verriegelungsvorrichtung bereits bekannt bzw. besteht bereits und ist bereits in der Türe zur bisher rein manuellen Benutzung integriert. Vorteilhaft ist, dass die bestehende Verriegelungsvorrichtung auf einfache und kostengünstige Weise mit dem Schlossaktuator nachgerüstet werden kann, insbesondere ohne Vornahme größerer Umbauten der Verriegelungsvorrichtung. Somit kann die Verriegelungsvorrichtung, z.B. durch eine entsprechende Auslöseaktion des Nutzers der Türe, mittels des Schlossaktuators automatisch, insbesondere elektromechanisch, betätigt werden. Insbesondere kann in vorteilhafter Weise eine berührungslose Türbewegung, Türverriegelung und Türentriegelung erreicht werden, was zu einer Steigerung eines Hygienestandards bei der Benutzung des Waschraums führen kann. Bei einem Ausfall des Schlossaktuators oder bei einem Stromausfall ist es weiterhin von Vorteil, dass die Verriegelungsvorrichtung auch manuell betätigbar ist.

Insbesondere ist die Türe als eine Falttür oder als eine Schwenk- bzw. Flügeltür ausgebildet. Die Falttür umfasst mehrere, insbesondere zwei Türblätter, die durch eine oder mehrere Scharniereinrichtungen schwenkbar miteinander verbunden sind. Alternativ kann die Türe als eine Schwenk- und/oder Flügeltür mit lediglich einem Türblatt ausgebildet sein, welches relativ zu dem Wandabschnitt schwenkbar ist.

In einer bevorzugten Ausführungsform ist daher die Türe eine Falttüre mit einem äußeren Türblatt und mit einem inneren Türblatt, wobei das äußere und das innere Türblatt über eine Scharniereinrichtung schwenkbar miteinander verbunden sind. Nur das äußere Türblatt grenzt an den Wandabschnitt an, wobei das Blockierelement in der Blockierstellung in die Scharniereinrichtung eingreift und/oder wobei gegebenenfalls - also falls vorhanden - das Verschlusselement in der Verriegelungsstellung in den Wandabschnitt eingreift.

In der Ausbildung der Türe als Falttürmit zwei Türblättern ist die Verriegelungsvorrichtung also insbesondere in das Türblatt integriert, welches an den Wandabschnitt angrenzt. Dieses an den Wandabschnitt angrenzende Türblatt wird im Folgenden als äußeres Türblatt bezeichnet und das schwenkbar mit dem äußeren Türblatt verbundene Türblatt wird im Folgenden als inneres Türblatt bezeichnet.

Eine konstruktive Realisierung der Erfindung sieht vor, dass das Blockierelement in der Blockierstellung in die Scharniereinrichtung oder in eine der Scharniereinrichtung zwischen den Türblättern eingreift, wenn es sich bei der Türe um die Falttür handelt. Somit kann das innere Türblatt relativ zu dem äußeren Türblatt nicht mehr geschwenkt werden und die Falttür ist gegen die Türbewegung blockiert. Eine weitere konstruktive Realisierung der Erfindung sieht vor, dass das Verschlusselement in der Verriegelungsstellung in den Wandabschnitt eingreift. Somit kann das äußere Türblatt der Falttür nicht mehr relativ zu dem Wandabschnitt geschwenkt werden und die Falttür ist verriegelt.

In einer alternativen Ausführungsform ist die Türe eine Schwenk- bzw. Flügeltüre mit genau einem Türblatt. Das Türblatt grenzt an den Wandabschnitt an, wobei das Verschlusselement in der Verriegelungsstellung in den Wandabschnitt eingreift und/oder das Blockierelement in der Blockierstellung in den Wandabschnitt eingreift.

Für den Fall, dass die Türe als die Schwenk- und/oder Flügeltür mit dem genau einem Türblatt ausgebildet ist, ist das Türblatt also angrenzend an den Wandabschnitt angeordnet. Die Schwenk- / Flügeltür weist keine beabstandet von dem Wandabschnitt angeordnete Scharniereinrichtung auf. Insbesondere ist die Verriegelung der Schwenk- / Flügeltür ausschließlich durch das Verschlusselement und das Blockierelement realisiert. Insbesondere greift das Verschlusselement / Blockierelement hierfür in der Verriegelungsstellung / Blockierstellung in den Wandabschnitt ein, um die Schwenkbewegung des Türblatts zu verhindern. Falls nur ein Element (Blockierelement oder Verschlusselement) die Tür blockiert, nimmt insbesondere das andere Element, also Blockierelement / Verschlusselement in der Blockier- / Verriegelungsstellung im Gegensatz zu dessen Funktion in der Falttüre, keine Kräfte auf.

Die Aufgabe der Erfindung wird auch gelöst durch eine Steuerungs- und Informationsanlage gemäß Anspruch 10. Diese dient für einen Raum eines Flugzeugs, welcher also in einem Flugzeug integriert und/oder integrierbar ist. Der Raum umfasst die oben erläuterte Türe.

Die Steuerungs- und Informationsanlage und zumindest ein Teil deren möglicher Ausführungsformen sowie die jeweiligen Vorteile wurden sinngemäß bereits im Zusammenhang mit der erfindungsgemäßen Türanordnung erläutert.

Die Steuerungs- und Informationsanlage umfasst die erfindungsgemäße Türanordnung. Die Steuerungs- und Informationsanlage weist eine Steuerungseinrichtung auf.

Die Steuerungs- und Informationsanlage enthält mindestens eine Mensch-Maschine-Schnittstelle. Die Mensch-Maschine-Schnittstelle ist dazu ausgebildet, eine Auslöseaktion eines Nutzers der Türe, z.B. eines Passagiers des Flugzeugs, zu erfassen und die Auslöseaktion als ein Auslösesignal an die Steuerungseinrichtung zu übermitteln. Zusätzlich zu dem Nutzer kann die Auslöseaktion auch durch die Besatzung und/oder das Personal des Flugzeugs vorgenommen werden. Vorzugsweise ist die Steuerungseinrichtung dazu ausgebildet, den Schlossaktuator - und optional den Türaktuator - in Abhängigkeit des Auslösesignals, also bei und/oder nach der Übermittlung des Auslösesignals, d.h. auf Basis des Auslösesignals, anzusteuern.

Die Steuerungs- und Informationsanlage enthält weiterhin eine Kommunikationsschnittstelle. Möglich ist es im Rahmen der Erfindung, dass die Kommunikationsschnittstelle in einer Anzeigeeinrichtung integriert ist. Möglich ist es auch, dass die Kommunikationsschnittstelle gemeinsam mit der Anzeigeeinrichtung und der Sensoreinrichtung in einem Gehäuse - insbesondere der Mensch-Maschine-Schnittstelle - aufgenommen ist. Bevorzugt ist, dass die Kommunikationsschnittstelle mit mindestens einem externen Ausgabegerät einer autorisierten Stelle und/oder mit der Anzeigeeinrichtung signal- und/oder datentechnisch verbunden ist.

Die Kommunikationsschnittstelle ist dazu ausgebildet, die Eingabeinformationen von der autorisierten Stelle an die Steuerungseinrichtung zu übermitteln. Beispielsweise kann sich die Besatzung oder das Personal durch Passworteingabe im Touchscreen oder drahtlos, beispielsweise durch near field communication (NFC), mit der Anzeigeeinrichtung oder auch über das externe Ausgabegerät autorisieren, um so eine "autorisierte Stelle" zu bilden und auf die Kommunikationsschnittstelle zugreifen zu können. Ein regulärer Nutzer, z.B. ein Passagier des Passagierflugzeuges, der Mensch-Maschine-Schnittstelle stellt zunächst keine autorisierte Stelle dar, da dieser sich nicht in besonderer Weise autorisiert hat. Insbesondere kann die autorisierte Besatzung oder das autorisierte Personal mittels der Kommunikationsschnittstelle die Eingabeinformationen an die Steuerungseinrichtung übermitteln. Vorzugsweise steuert die Steuerungseinrichtung die Anzeigeeinrichtung dazu an, die Eingabeinformationen anzuzeigen.

Die Kommunikationsschnittstelle dient also zur Übermittlung der Eingabeinformationen einer autorisierten Stelle an die Steuerungseinrichtung.

Alternativ oder ergänzend ist die Mensch-Maschine-Schnittstelle dazu ausgebildet, Ausgabeinformationen der Steuerungseinrichtung an die autorisierte Stelle zu übermitteln. Vorzugsweise ist die Mensch-Maschine-Schnittstelle dazu ausgebildet, einen Austausch der Eingabeinformationen und der Ausgabeinformationen zwischen der autorisierten Stelle und der Steuerungseinrichtung vorzunehmen. Der Austausch kann beispielsweise wechselseitig erfolgen. Insbesondere ist eine Kommunikation zwischen der Steuerungs- und Informationsanlage und der autorisierte Stelle, im Speziellen zwischen der Steuerungseinrichtung und der autorisierte Stelle, über den Raum und/oder das Flugzeug, in dem der Raum integriert ist, möglich. Die autorisierte Stelle ist nicht der übliche Nutzer der Türe, also nicht der Passagier. Bei der autorisierten Stelle handelt es sich vielmehr um mindestens eine zusätzliche Instanz, z.B. um ein Mitglied der Besatzung bzw. um Personal des Flugzeugs. Es kann sich auch um einen Bordcomputer des Flugzeugs zur Flugzeugsteuerung handeln. Beispielsweise ist die Mensch-Maschine-Schnittstelle außerhalb des Raums, insbesondere benachbart zu der Türe, angeordnet.

In einer bevorzugten Ausführungsform umfasst die Türanordnung, insbesondere der Schlossaktuator, einen ersten Positionssensor, welcher zur Erfassung der Position des ersten Stellelements als erstes Positionssignal ausgebildet ist. Die Position des ersten Stellelements gibt insbesondere an, ob die Türbewegung blockiert und ob die Türe verriegelt ist oder ob die Türbewegung unblockiert und die Türe unverriegelt ist. Alternativ oder zusätzlich umfasst die Türanordnung, insbesondere der Schlossaktuator, einen zweiten Positionssensor, welcher zur Erfassung einer absoluten Türposition, zum Beispiel "geöffnet", "geschlossen", "teilweise geöffnet" etc., als zweites Positionssignal ausgebildet ist.

Die Türanordnung umfasst dann auch einen Türaktuator zum Öffnen und Schließen der Türe, insbesondere zur Durchführung der Türbewegung. Beispielsweise umfasst der Türaktuator eine Antriebseinheit bestehend aus einem Elektromotor und einem Getriebe, welche zur Erzeugung und Übertragung eines Drehmoments auf mindestens eine Scharniereinrichtung der Türe ausgebildet ist.

Die Steuerungseinrichtung ist dazu ausgebildet, den Schlossaktuator und/oder den Türaktuator auf Basis des ersten oder zweiten Positionssignals anzusteuern. Die Steuerungseinrichtung umfasst vorzugsweise ein Gehäuse, in dem ein Controller, Motortreiber zum Antrieb von Elektromotoren des Türaktuators und des Schlossaktuators, ein Speicher, eine Stromanbindung an eine Stromversorgung des Flugzeugs, diskrete Ein- und Ausgänge und/oder Datenbusschnittstellen der Steuerungseinrichtung aufgenommen sind.

Vorteilhaft ist, dass mittels der Steuerungs- und Informationsanlage ein mit dem Flugzeug, der Besatzung und/oder dem Personal vernetzter Raum mit automatisch und bei Bedarf manuelle betätigbarer Türe für den Nutzer und auch für die autorisierte Stelle bereitgestellt werden kann.

Die Positionssensoren sind signaltechnisch mit der Steuerungseinrichtung verbunden. Insbesondere kann die durch den ersten Positionssensor des Schlossaktuators erfasste Position des ersten Stellelements als ein erstes Positionssignal an die Steuerungseinrichtung übermittelt werden. Alternativ oder optional ergänzend kann die durch den zweiten Positionssensor des Schlossaktuators erfasste Türposition als ein zweites Positionssignal an die Steuerungseinrichtung übermittelt werden. Vorzugsweise ist die Steuerungseinrichtung dazu ausgebildet, den Schlossaktuator, insbesondere die Antriebseinrichtung des Schlossaktuators, auf Basis des ersten Positionssignals ansteuern. Optional ergänzend oder alternativ ist die Steuerungseinrichtung dazu ausgebildet, den Türaktuator, insbesondere die Antriebseinrichtung, auf Basis des zweiten Positionssignals anzusteuern. Insbesondere werden der Türaktuator und/oder der Schlossaktuator bei und/oder nach der Übermittlung des Auslösesignals positionsabhängig bestromt. Vorteilhaft ist, dass der Schlossaktuator nur dann dazu aktiviert wird, die Türe zu verriegeln und die Türbewegung zu blockieren, wenn durch das zweite Positionssignal übermittelt ist, dass die Türe geschlossen ist. Somit kann eine Verriegelung und Blockierung der Türbewegung bei geöffneter Türe verhindert werden.

In einer möglichen Ausführungsform, in der ein Türaktuator vorhanden ist, kann dieses zweite Positionssignal auch durch den Türaktuator zur Verfügung gestellt werden.

In einer bevorzugten Ausführungsform der Erfindung umfasst die Mensch-Maschine-Schnittstelle eine Anzeigeeinrichtung. Bevorzugt ist die Anzeigeeinrichtung als ein Monitor oder als ein Display optional ergänzend mit einer entsprechenden Hardwareplattform ausgebildet. Beispielsweise umfasst die Anzeigeeinrichtung einen Touchscreen zur berührungsempfindlichen Betätigung. Möglich ist es auch, dass die Anzeigeeinrichtung eine Lautsprecherfunktion für Audioausgaben umfasst.

Vorzugsweise ist die Anzeigeeinrichtung dazu ausgebildet, die Eingabeinformationen der autorisierten Stelle anzuzeigen. Bevorzugt ist die Anzeigeeinrichtung dazu ausgebildet, die Ausgabeinformationen der Steuerungseinrichtung anzuzeigen und/oder auszugeben. Optional ergänzend ist die Anzeigeeinrichtung dazu ausgebildet, die Auslöseaktion des Nutzers und/oder zu initiierende Aktionen des Nutzers anzuzeigen.

Bei den Eingabeinformationen kann es sich zum Beispiel um Kommandos der Besatzung und/oder des Personals handeln, die zu einer Deaktivierung der Steuerungseinrichtung, insbesondere zu einer Stromlosschaltung der Steuerungseinrichtung, führen und eine manuelle Entriegelung und Öffnung der Türe erlauben. Dies ist zum Beispiel bei einem Notfall von Vorteil, insbesondere wenn sich der Nutzer des Raums in Schwierigkeiten befindet und die Türe des Raums nicht mehr selbstständig entriegeln und öffnen kann. Möglich ist auch, dass die Besatzung und/oder das Personal Kommandos als Eingabeinformationen eingibt, um notwendige Instandhaltungs- und/oder Säuberungsmaßnahmen in dem Raum vorzunehmen. In diesem Fall kann die Türe für eine gewisse Zeit durch die Besatzung und/oder das Personal geschlossen und verriegelt werden, um die Maßnahmen in dem Raum durchzuführen und um zu verhindern, dass ein Passagier den Raum währenddessen betritt. Die Eingabeinformationen können auch Dateien oder Inhalte auf einem Speichermedium sein, die in einem Speicher der Mensch-Maschine-Schnittstelle von einer Airline, der Besatzung und/oder von dem Personal hinterlegt sind/werden. Insbesondere kann ein Inhalt der Dateien oder des Speichermediums, z.B. individuelle Anzeigen, von der Steuerungseinrichtung abgerufen und umgesetzt bzw. auf der Anzeigeeinrichtung angezeigt werden.

Bei den Eingabeinformationen kann es sich alternativ oder optional ergänzend um flugzeugseitige und/oder flugphasenabhängige Kommandos des Bordcomputers zur Flugzeugsteuerung handeln. Insbesondere ist die Türe bei Taxi, Start, Landung und/oder bei auftretenden Turbulenzen, etc. auf Basis der flugzeugseitigen und/oder flugphasenabhängige Kommandos mittels der Steuerungseinrichtung automatisch verschließbar und verriegelbar. Dadurch kann in vorteilhafter Weise eine Nutzung des Raums in bestimmten Flugphasen verhindert werden und somit die Sicherheit der Passagiere an Bord erhöht werden.

In einer bevorzugten Umsetzung der Erfindung ist die Kommunikationsschnittstelle auch dazu ausgebildet, die Ausgabeinformationen insbesondere von der Steuerungseinrichtung an die autorisierte Stelle zu übermitteln. Beispielsweise sind die Ausgabeinformationen auf der Anzeigeeinrichtung als Zeichen, Text, Bilder und/oder Video anzeigbar. Optional ergänzend ist es möglich, dass die Ausgabeinformationen als Audioausgaben über die optionale Lautsprecherfunktion der Anzeigeeinrichtung ausgegeben werden. Vorzugsweise steuert die Steuerungseinrichtung die Anzeige der Ausgabeinformationen auf der Anzeigeeinrichtung an.

Beispielsweise umfassen die Ausgabeinformationen einen Türstatus, z.B. eine Angabe darüber, ob die Türe geöffnet oder geschlossen und/oder entriegelt oder verriegelt ist. Die Ausgabeinformationen können auch Aktionen umfassen, die von einem Nutzer der Türe zu initiieren sind. Beispielsweise können die Ausgabeinformationen eine Warnung enthalten, dass die Türe geschlossen ist und noch verriegelt werden muss oder dass die Türe verriegelt ist und zum Öffnen zunächst entriegelt werden muss.

Bei den Ausgabeinformationen kann es sich auch um individuelle Anzeigen handeln, die in dem Speicher hinterlegt sind/wurden. Bei den individuellen Anzeigen kann es sich zum Beispiel um flugabhängige Schriftzüge, Videosequenzen, um Begrüßungs- oder Verabschiedungssätze, um Piktogramme und/oder Logos oder Ähnliches handeln. Beispielsweise können die individuellen Anzeigen zeitgesteuert durch die Steuerungseinrichtung zur Anzeige auf der Anzeigeeinrichtung angesteuert werden. Möglich ist es im Rahmen der Erfindung auch, dass die individuellen Anzeigen in bestimmten Flugphasen des Flugzeugs angezeigt werden.

In einer besonders bevorzugten Ausführungsform der Erfindung umfasst die Mensch-Maschine-Schnittstelle die Sensoreinrichtung. Vorzugsweise weist die Sensoreinrichtung mindestens einen optischen Näherungssensor und/oder einen kapazitiven Näherungssensor zur Erfassung einer berührungslosen Annäherung des Nutzers auf. Beispielsweise handelt es sich bei der berührungslosen Annäherung des Nutzers um ein Vorbeigehen an dem Näherungssensor oder um ein Stehenbleiben des Nutzers vor dem Näherungssensor. Insbesondere bildet die berührungslose Annäherung des Nutzers die Auslöseaktion, welche als Auslösesignal an die Steuerungseinrichtung zur Ansteuerung des Türaktuators und des Schlossaktuators übermittelbar ist.

Alternativ oder optional ergänzend weist die Sensoreinrichtung einen time-of-flight-Sensor zur Erfassung einer berührungslosen Geste des Nutzers auf. Bei der berührungslosen Geste des Nutzers kann es sich zum Beispiel um eine Wischbewegung mit der Hand des Nutzers vor dem time-of-flight-Sensor handeln. Insbesondere bildet die berührungslose Geste die Auslöseaktion, welche als Auslösesignal an die Steuerungseinrichtung zur Ansteuerung des Türaktuators und des Schlossaktuators übermittelbar ist.

Vorteilhaft ist, dass der Nutzer und optional ergänzend die Besatzung und/oder das Personal das Öffnen, das Schließen, die Verriegelung und die Entriegelung der Türe durch die Auslöseaktion berührungslos vornehmen kann. Insbesondere können hygienische Aspekte und behindertengerechte Maßnahmen durch die Betätigungsvorrichtung realisiert werden. Vorteilhaft ist weiterhin, dass die Anzeigeeinrichtung mittels der Steuerungseinrichtung dazu ansteuerbar ist, die Ausgabeinformationen, insbesondere den Türstatus, auf Basis des Auslösesignals anzuzeigen. Somit kann der Nutzer und optional ergänzend die Besatzung und/oder das Personal auf dem aktuellen Stand über die angesteuerten Aktionen der Türe gehalten werden und/oder über Maßnahme informiert werden, die zur Betätigung der Türe vorzunehmen sind.

Insbesondere für den Fall, dass die Anzeigeeinrichtung der Touchscreen ist, kann die Auslöseaktion durch den Nutzer auch manuell, insbesondere durch eine entsprechende berührungsempfindliche Eingabe auf dem Touchscreen, erfolgen. Alternativ oder optional ergänzend kann der Touchscreen auch dazu verwendet werden, die Eingabeinformationen durch die autorisierte Stelle einzugeben und an die Steuerungseinrichtung zu übermitteln. Insbesondere ist eine individuelle Konfiguration der Ausgabeinformationen durch die autorisierte Stelle möglich.

In einer bevorzugten Realisierung der Erfindung weist die Steuerungs- und Informationsanlage mehrere, zum Beispiel zwei Mensch-Maschine-Schnittstellen auf. Vorzugsweise ist eine der Mensch-Maschine-Schnittstellen auf einer Seite der Türe, insbesondere außerhalb des Raums, angeordnet und mindestens eine weitere Mensch-Maschine-Schnittstelle auf der anderen Seite der Türe, insbesondere innerhalb des Raums angeordnet. Somit ist in vorteilhafter Weise gewährleistet, dass der Nutzer die Auslöseaktion auf beiden Seiten der Türe durchführen kann. Weiterhin kann dadurch gewährleistet werden, dass die autorisierte Stelle, insbesondere über die Kommunikationsschnittstelle, durch entsprechende Eingabe der Eingabeinformationen Befehle, wie beispielsweise eine Türverriegelung, kommandiert und Zugriff auf die über die Anzeigeeinrichtung ausgegebenen Anzeigen auf beiden Seiten der Türe hat.

Eine mögliche Ausgestaltung der Erfindung sieht vor, dass die Mensch-Maschine-Schnittstelle innerhalb des Raums situationsabhängig ein Öffnen, Schließen, Verriegeln und Entriegeln der Türe initiiert. In einer Ausführungsform könnte die Mensch-Maschine-Schnittstelle innerhalb des Raums durch zwei physisch entkoppelte Einheiten realisiert werden. Ein Schalter würde den Türaktuator adressieren, während ein weiterer Schalter der Mensch-Maschinen-Schnittstelle den Schlossaktuator adressieren würde. So kann in bevorzugter Weise eine intuitive Bedienung durch den Nutzer erfolgen. Insbesondere kann der Nutzer innerhalb des Raums bei geschlossenem und entriegeltem Zustand der Türe entweder ein Öffnungsvorgang oder ein Verriegelungsvorgang initiieren. Die Mensch-Maschine-Schnittstelle außerhalb des Raums initiiert situationsabhängig ein Öffnen und Schließen der Türe.

Eine mögliche Ausgestaltung der Erfindung sieht vor, dass die Steuerungseinrichtung eine Auswerteeinrichtung umfasst. Vorzugsweise ist die Auswerteeinrichtung dazu ausgebildet, das Auslösesignal auszuwerten. Alternativ oder optional ergänzend ist die Auswerteeinrichtung dazu ausgebildet, Betriebsdaten des Türaktuators und des Schlossaktuators zu ermitteln und auszuwerten. Beispielsweise umfassen die Betriebsdaten Betriebszeiten und/oder ein Antriebsmoment des Türaktuators und des Schlossaktuators und/oder ein zum Betreiben des Türaktuators und des Schlossaktuators aufgewandter Stromverbrauch. Vorzugsweise ist auf Basis der ausgewerteten Betriebsdaten ein Betriebszustand der Steuerungs- und Informationsanlage, insbesondere durch die Auswerteeinrichtung, auswertbar. Möglich ist im Rahmen der Erfindung, dass anhand des Betriebszustands ein betriebsbedingter Verschleiß von Komponenten der Steuerungs- und Informationsanlage, zum Beispiel des Türaktuators oder des Schlossaktuators, erkannt werden kann und dass dadurch eine interne Fehlerbehandlung durch die Steuerungseinrichtung angesteuert werden kann. Für den Fall, dass die interne Fehlerbehandlung nicht erfolgreich durchgeführt werden kann, ist die Steuerungseinrichtung vorzugsweise dazu ausgebildet, die entsprechenden Komponenten auszuschalten. So kann weiterhin ein zumindest eingeschränkter Betrieb gewährleistet werden.

In einer bevorzugten Ausführungsform der Erfindung ist der Betriebszustand über die Kommunikationsschnittstelle, insbesondere durch die Steuerungseinrichtung, an die autorisierte Stelle übermittelbar. Insbesondere kann der Betriebszustand zur Meldung von Notfällen, einer Türblockierung und/oder von notwendigen Wartungen auf das externe Ausgabegerät übermittelt werden. Alternativ oder optional ergänzend kann der Betriebszustand auf der Anzeigeeinrichtung angezeigt werden. Somit kann die autorisierte Stelle und/oder der Nutzer über den Betriebszustand informiert werden. Vorteilhaft ist, dass der Betriebszustand frühzeitig an die autorisierte Stelle übermittelt werden kann und dadurch sofortige oder rechtzeitige abgestimmte Maßnahmen ergriffen werden können.

Beispielsweise ist anhand der Betriebszeiten und des daraus ausgewerteten Betriebszustands ablesbar, wie oft die Türe betätigt und der Raum benutzt wurde. Insbesondere kann diesen Informationen entnommen werden, ob und wann der Raum gereinigt und/oder gewartet werden muss. Anhand der Geschwindigkeit des Türaktuators kann zum Beispiel ein benötigtes Antriebsmoment errechnet werden, mit der die Tür geöffnet und geschlossen wird. Somit kann überprüft werden, ob die erzeugten Drehmomente und Geschwindigkeiten den Sicherheitsstandards entsprechen. Es können Bewegungsprofile implementiert werden, auf Basis derer der Türaktuator und/oder der Schlossaktuator angesteuert werden können. So kann ein Klemmschutz realisiert und Verletzungen des Nutzers, der Besatzung und/oder des Personals verhindert werden.

Möglich ist es im Rahmen der Erfindung auch, dass in dem Speicher der Steuerungs- und Informationsanlage eine reguläre Nutzungszeit des Raums als Eingabeinformation hinterlegt ist, wobei die Nutzungszeit, insbesondere von der Auswerteeinrichtung, z.B. anhand von Zeitpunkten ermittelt werden kann, an denen die Tür von innerhalb des Raums geschlossen und verriegelt wird und wieder von innerhalb des Raums entriegelt und geöffnet wird. Optional kann zur Ermittlung der Nutzungszeit ein Timer in der Auswerteeinrichtung integriert sein. Bevorzugt wird der Timer gestartet, wenn die Türe, insbesondere im Inneren des Raums, verriegelt wird und zurückgesetzt, wenn die Türe entriegelt und/oder geöffnet wird. So kann bevorzugt sichergestellt werden, dass der Nutzer sich im Inneren des Raums befindet und eine Verriegelung nicht außerhalb des Raums initiiert wurde. Außerdem kann beim Zurücksetzen des Timers durch die Erkennung der Türöffnung sichergestellt werden, dass ein im Raum befindlicher Nutzer den Raum verlassen konnte.

Eine ermittelte Zeitüberschreitung der hinterlegten Nutzungszeit kann auf einen Notfall in dem Raum hinweisen, sodass entsprechende Hilfsmaßnahmen, insbesondere nach einer Mitteilung an die autorisierte Stelle, eingeleitet werden können. Beispielsweise kann die Besatzung und/oder das Personal die Türe mittels der Steuerungseinrichtung oder durch manuelle Betätigung der Verriegelungsvorrichtung entriegeln, öffnen und Hilfe leisten.

Anhand des Betriebszustands kann vorzugsweise auch ein Ausfall des Türaktuators und/oder des Schlossaktuators, eine Stromunterbrechung der Steuerungseinrichtung oder ein sonstiger Defekt von Komponenten der Steuerungs- und Informationsanlage erkannt und der autorisierten Stelle mitgeteilt werden. Vorteilhaft ist, dass Reinigungs-, Wartungs-, Reparatur- und/oder Hilfsmaßnahmen auf Basis des übermittelten Betriebszustands sicher und rechtzeitig durch die autorisierte Stelle eingeleitet werden können.

Die Aufgabe der Erfindung wird auch gelöst durch einen Raum gemäß Anspruch 11. Der Raum dient zur Integration in ein Flugzeug. Der Raum enthält die erfindungsgemäße Türanordnung. Alternativ enthält der Raum die erfindungsgemäße Steuerungs- und Informationsanlage, die wiederum die erfindungsgemäße Türanordnung enthält.

Vorzugsweise ist der Raum in einer Kabine des Flugzeugs integrierbar. Bei dem Raum kann es sich um einen Toiletten- und/oder Duschraum, um eine Umkleidekabine, einen Ruhebereich für die Besatzung o.ä. handeln. Der Raum umfasst die Wandstruktur, welche den Raum zumindest abschnittsweise umschließt. Der Raum weist die Türe auf, welche in der Wandstruktur angeordnet ist. Die Türe ist seitlich neben zumindest einem Wandabschnitt der Wandstruktur oder zwischen zwei Wandabschnitten der Wandstruktur angeordnet.

Der Raum und zumindest ein Teil dessen möglicher Ausführungsformen sowie die jeweiligen Vorteile wurden sinngemäß bereits im Zusammenhang mit der erfindungsgemäßen Türanordnung oder der erfindungsgemäße Steuerungs- und Informationsanlage erläutert.

Die Aufgabe der Erfindung wird auch gelöst durch ein Flugzeug gemäß Anspruch 12. Das Flugzeug enthält die erfindungsgemäße Türanordnung. Alternativ enthält das Flugzeug die erfindungsgemäße Steuerungs- und Informationsanlage. Alternativ enthält das Flugzeug den erfindungsgemäßen Raum.

Das Flugzeug und zumindest ein Teil dessen möglicher Ausführungsformen sowie die jeweiligen Vorteile wurden sinngemäß bereits im Zusammenhang mit der erfindungsgemäßen Türanordnung oder der erfindungsgemäße Steuerungs- und Informationsanlage oder dem erfindungsgemäßen Raum erläutert.

Weitere Merkmale, Wirkungen und Vorteile der Erfindung ergeben sich aus der nachfolgenden Beschreibung bevorzugter Ausführungsbeispiele der Erfindung sowie der beigefügten Figuren. Dabei zeigen:
- Figur 1: eine stark schematisierte Darstellung einer Steuerungs- und Informationsanlage innerhalb einer Systemarchitektur mit einem Flugzeug und einem in dem Flugzeug angeordnetem Raum mit Tür;
- Figur 2: eine schematische Darstellung einer Wischgeste mit einer Hand vor einer Sensoreinrichtung der Steuerungs- und Informationsanlage;
- Figur 3: einen Türaktuator der Steuerungs- und Informationsanlage zum Öffnen und Schließen der Türe des Raums;
- Figur 4: eine perspektivische Draufsicht auf eine Innenseite der Türe, wobei eine Einbausituation einer Verriegelungsanordnung der Steuerungs- und Informationsanlage zur Verriegelung und Bewegungsblockierung der Türe gezeigt ist;
- Figur 5a: eine Draufsicht auf eine Vorderseite der Verriegelungsanordnung mit einer Verriegelungsvorrichtung in einem entriegelten Zustand und mit einem Schlossaktuator;
- Figur 5b: und auf deren Rückseite;
- Figur 6a: die Draufsicht aus Fig. 5a mit der Verriegelungsvorrichtung in einem verriegelten Zustand wieder auf deren Vorderseite;
- Figur 6b: und deren Rückseite.

Übereinstimmende oder gleiche Teile sind in den Figuren mit den gleichen Bezugszeichen versehen.

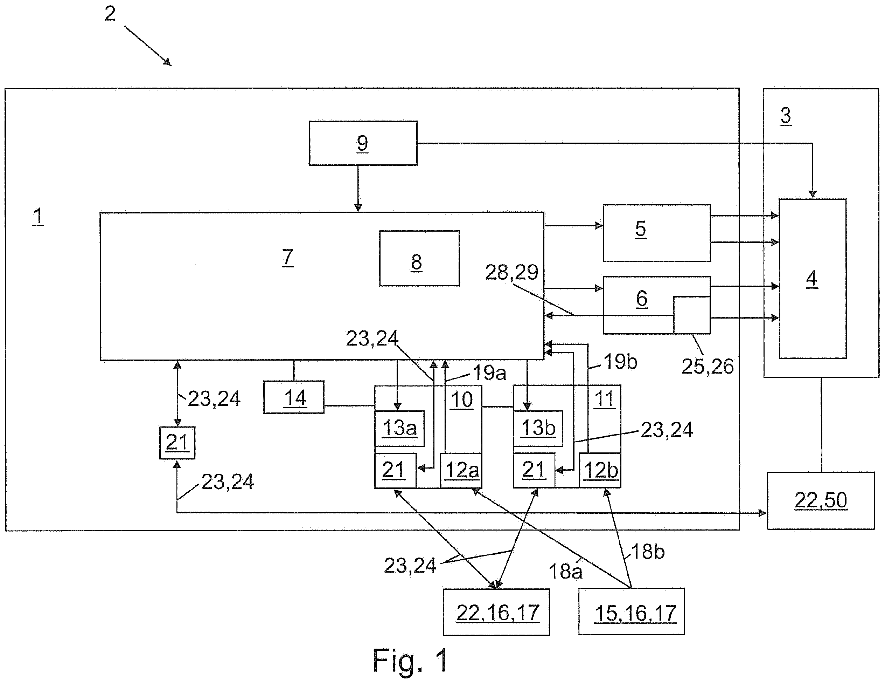

Figur 1 zeigt in einer schematischen Darstellung eine Steuerungs- und Informationsanlage 1, welche in eine Systemarchitektur integriert ist. Die Systemarchitektur umfasst ein Flugzeug 2 mit einem Bordcomputer und einen Raum 3, welcher als ein Waschraum, Duschraum oder Umkleideraum für Passagiere und/oder Personal oder als ein Ruheraum für eine Besatzung des Flugzeugs ausgebildet ist. Der Raum 3 ist in einer Kabine des Flugzeugs 2 integriert. Der Raum 3 ist an eine Stromversorgung des Flugzeugs 2 angebunden und über einen Datenbus signaltechnisch mit dem Flugzeug 2, insbesondere mit dem Bordcomputer, verbunden.

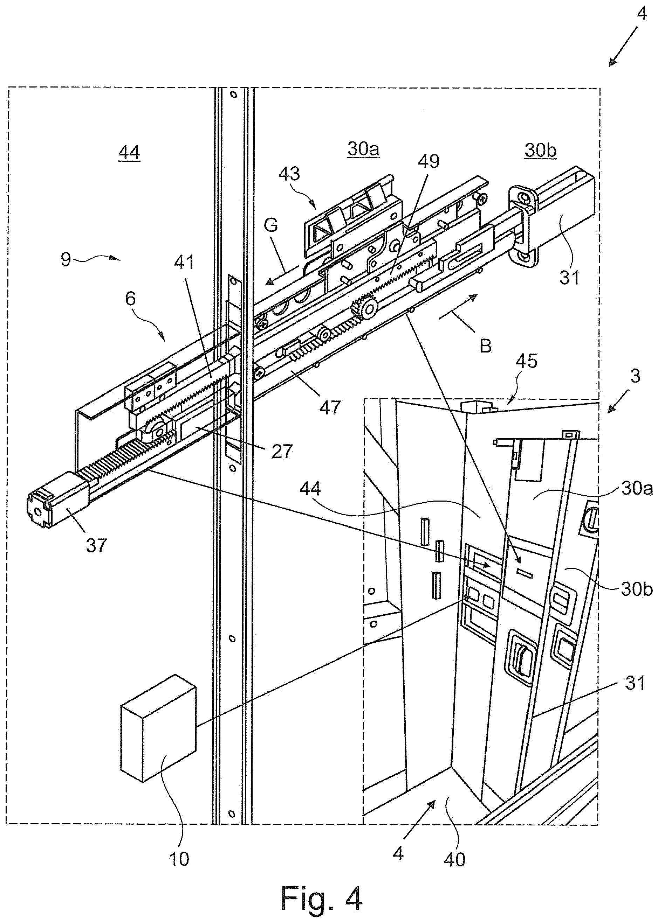

Der Raum 3 weist gemäß der Figur 4 eine Türe 4 auf, die in einer den Raum 3 zumindest abschnittsweise umgebenden Wandstruktur 45 angeordnet ist. Die Türe 4 ist als eine Falttür mit einem äußeren Türblatt 30a und mit einem inneren Türblatt 30b ausgebildet. Das äußere und das innere Türblatt 30a, 30b sind über mindestens eine Scharniereinrichtung 31 schwenkbar miteinander verbunden. Das innere Türblatt 30b schließt sich an das äußere Türblatt 30a der Falttür an, wobei das äußere Türblatt 30a an einen Wandabschnitt 44 der Wandstruktur 45 des Raums 3 angrenzt und relativ zu diesem verschwenkbar ist. Über die Türe 4 kann der Raum 3 betreten und wieder verlassen werden.

Die Steuerungs- und Informationsanlage 1 ist zur Ansteuerung der Türe 4 und zum Austausch von Informationen über den Raum 3 ausgebildet. Sie umfasst einen Türaktuator 5, einen Schlossaktuator 6, eine Steuerungseinrichtung 7 mit einer Auswerteeinrichtung 8. Die Steuerungseinrichtung 7 ist an die Stromversorgung des Flugzeugs 2 angebunden und über den Datenbus mit dem Flugzeug 2, insbesondere mit dem Bordcomputer, verbunden.

Der Schlossaktuator 6 bildet gemeinsam mit einer Verriegelungsvorrichtung 43 einen Bestandteil einer Verriegelungsanordnung 9, welche ein Bestandteil der Steuerungs- und Informationsanlage 1 ist und in den Figuren 4 bis 6 gezeigt ist. Die Verriegelungsanordnung 9 ist zur Verriegelung und Bewegungsblockierung der Türe 4 ausgebildet. Der Schlossaktuator 6 ist dazu ausgebildet, die Verriegelungsvorrichtung 43 zu betätigen. Alternativ kann die Verriegelungsvorrichtung 43 manuell durch einen Nutzer 15, durch eine Besatzung 16 und/oder weiteres Personal 17 des Flugzeuges 2 betätigt werden. Das weitere Personal 17 sind zum Beispiel Reinigungs- oder Servicekräfte, die sich während einer Stillstandszeit des Flugzeugs 2 am Boden im Flugzeug 2 aufhalten.

Die Steuerungs- und Informationsanlage 1 umfasst eine erste Mensch-Maschine-Schnittstelle 10. Die erste Mensch-Maschine-Schnittstelle 10 ist auf einer ersten Seite der Türe 4 innerhalb des Raums 3 angeordnet. Die erste Mensch-Maschine-Schnittstelle 10 umfasst mindestens eine erste Sensoreinrichtung 12a mit mindestens einem Sensor, welcher ein optischer oder kapazitiver Näherungssensor oder ein time-of-flight-Sensor ist. Die erste Mensch-Maschine-Schnittstelle 10 umfasst eine erste Anzeigeeinrichtung 13a, welche als ein Monitor oder Display ausgebildet ist. Die erste Anzeigeeinrichtung 13a umfasst einen Touchscreen, auf dem Eingaben vorgenommen werden können und auf dem Anzeigen und/oder Audioausgaben ausgegeben werden können. Die erste Mensch-Maschine-Schnittstelle 10 ist mit einem Speicher 14 verbunden und weist eine Kommunikationsschnittstelle 21 auf.

Die Steuerungs- und Informationsanlage 1 umfasst eine zweite Mensch-Maschine-Schnittstelle 11, welche auf einer anderen Seite der Türe 4 außerhalb des Raums 3 angeordnet ist. Die zweite Mensch-Maschine-Schnittstelle 11 umfasst mindestens eine zweite Sensoreinrichtung 12b mit mindestens einem Sensor, welcher ein optischer oder kapazitiver Näherungssensor oder ein time-of-flight-Sensor ist. Die zweite Mensch-Maschine-Schnittstelle 11 umfasst eine zweite Anzeigeeinrichtung 13b, welche als ein Monitor oder Display ausgebildet ist. Die zweite Anzeigeeinrichtung 13b umfasst einen Touchscreen, auf dem Eingaben vorgenommen werden können und auf dem Anzeigen und/oder Audioausgaben ausgegeben werden können. Die erste und die zweite Mensch-Maschine-Schnittstelle 10, 11 nutzen den Speicher 14 und die Kommunikationsschnittstelle 21 gemeinsam.

In der Systemstruktur sind der Nutzer 15 der Türe 4, die Besatzung 16 und weiteres Personal 17 vorhanden. Die Besatzung 16, das weitere Personal 17 und der Bordcomputer des Flugzeugs 2 bilden eine autorisierte Stelle 22 innerhalb der Systemstruktur.

Der Nutzer kann als eintretender Nutzer 15 von außerhalb des Raums 3 die Türe 4 entriegeln und/oder öffnen, um den Raum 3 zu betreten. Dies kann durch manuelle Betätigung der Verriegelungsvorrichtung 43 der Verriegelungsanordnung 9 (Figuren 4 bis 6) erfolgen. Alternativ, da die zweite Mensch-Maschine-Schnittstelle 11 und der Türaktuator 5 vorgesehen ist, erfasst die zweite Sensoreinrichtung 12b eine Auslöseaktion 18b des eintretenden Nutzers 15.

Als austretender Nutzer 15, der den Raum 3 durch die Türe 4 verlässt, kann der Nutzer 15 die Türe 4 von innerhalb des Raums 3 entriegeln und öffnen, um diesen zu verlassen. Hierzu erfasst die erste Sensoreinrichtung 12a die Auslöseaktion 18a des austretenden Nutzers 15. Auch die Besatzung 16 und/oder das weitere Personal 17 können - als Menschen wie der Nutzer 15 und nicht in der Funktion als autorisierte Stelle 22 - die Auslöseaktion 18a, 18b in entsprechender Weise vornehmen. Mit anderen Worten können sie den Raum wie ein "normaler" Nutzer 15 benutzen.

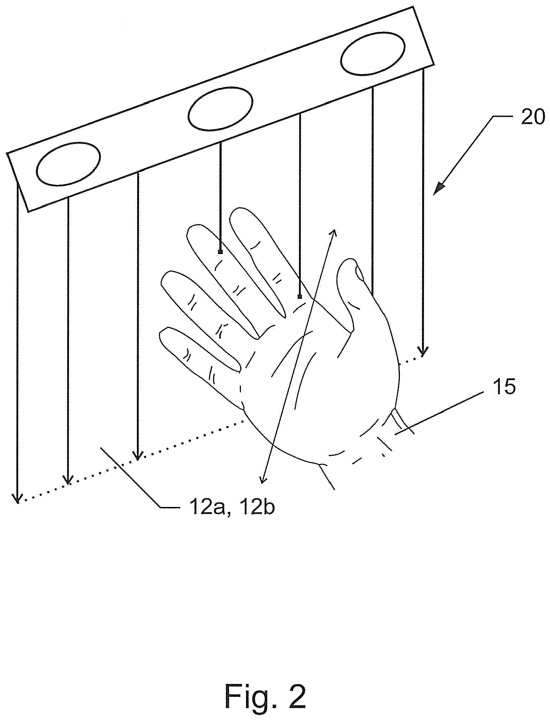

Die Auslöseaktion 18a, 18b ist eine Annäherung des Nutzers 15, der Besatzung 16 und/oder des weiteren Personals 17 an die Sensoreinrichtung 12a, 12b, wenn diese mindestens einen Näherungssensor umfasst. Die Auslöseaktion 18a, 18b ist alternativ eine Geste 20 vor der Sensoreinrichtung 12a, 12b. Bei der Geste 20 kann es sich um eine Wischbewegung mit der Hand des Nutzers 15, der Besatzung 16 und/oder des weiteren Personals 17 vor dem time-of-flight-Sensor handeln, so wie es in der Figur 2 gezeigt ist. Die Auslöseaktion 18a, 18b kann alternativ oder optional ergänzend durch eine entsprechende Eingabe des Nutzers 15a, 15b, der Besatzung 16 und/oder des weiteren Personals 17 auf dem Touchpad der Anzeigeeinrichtung 13a, 13b erfolgen.

Die jeweilige Sensoreinrichtung 12a, 12b übermittelt die Auslöseaktionen 18a, 18b als Auslösesignale 19a, 19b an die Steuerungseinrichtung 7. Die Steuerungseinrichtung 7 kann den Türaktuator 5 auf Basis des jeweiligen Auslösesignals 19a, 19b dazu ansteuern, die Türe 4 zu öffnen. Sie kann auch den Schlossaktuator 6 auf Basis des Auslösesignals 19a, 19b dazu ansteuern, die Türe 4 zu entriegeln und eine Bewegungsblockierung der Türe 4 aufzuheben. Auf Basis des jeweiligen Auslösesignals 19a, 19b kann die Steuerungseinrichtung 7 den Türaktuator 5 dazu ansteuern, die Türe 4 zu schließen und den Schlossaktuator 6 dazu ansteuern, die Türe 4 zu verriegeln und die Türbewegung zu blockieren.

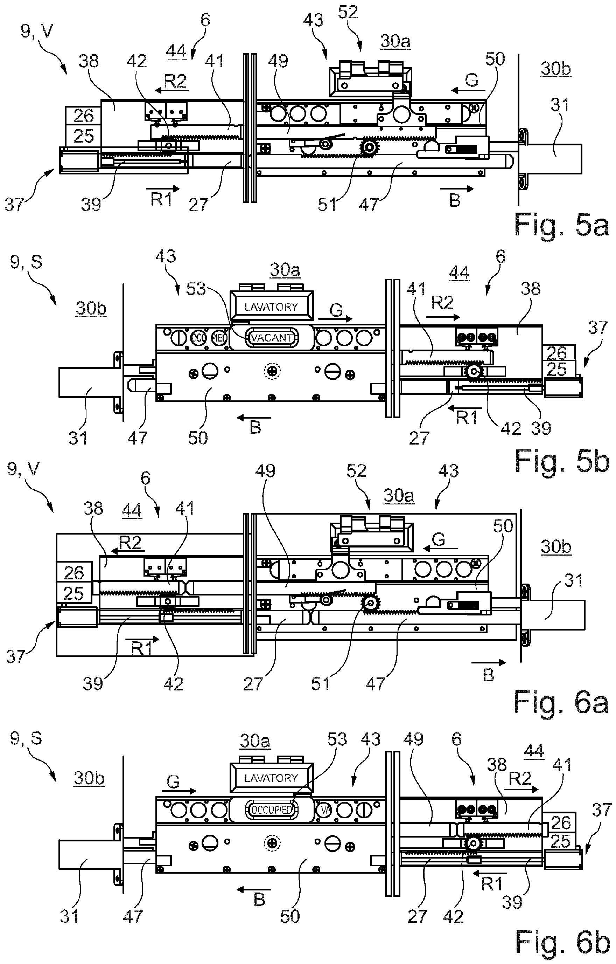

Der Schlossaktuator 6 umfasst einen ersten Positionssensor 25 und einen zweiten Positionssensor 26 (siehe Figuren 4 und 5). Der erste Positionssensor 25 erfasst eine Position der Türe 4, insbesondere ob die Türe 4 geöffnet, teilweise geöffnet oder geschlossen ist. Der zweite Positionssensor 26 erfasst eine Stellung eines ersten Stellelements 27, hier in Form eines Bolzens, des Schlossaktuators 6 (siehe Figuren 5 und 6) und somit ob die Türe 4 verriegelt und in der Türbewegung blockiert oder entriegelt und bewegbar ist.

Die Position der Türe 4 wird als ein erstes Positionssignal 28 und die Stellung des ersten Stellelements 27 als ein zweites Positionssignal 29 von dem jeweiligen Positionssensor 25, 26 an die Steuerungseinrichtung 7 übermittelt. Die Auswerteeinrichtung 8 wertet das erste Positionssignal 28 und das zweite Positionssignal 29 aus. Die Steuerungseinrichtung 7 steuert bei bzw. nach der Übermittlung des jeweiligen Auslösesignals 19a, 19b den Türaktuator 5 in Abhängigkeit des ersten Positionssignals 28 dazu an, ein Drehmoment zum Öffnen bzw. Schließen der Türe 4 zu erzeugen. Die Steuerungseinrichtung 7 steuert den Schlossaktuator 6 bei bzw. nach der Übermittlung des jeweiligen Auslösesignals 19a, 19b in Abhängigkeit des zweiten Positionssignals 29 dazu an, das ersten Stellelement 27 translatorisch zu bewegen, um die Türe 4 mittels der Verriegelungsvorrichtung 43 zu verriegeln und die Bewegungsblockierung der Türe 4 vorzunehmen oder die Türe 4 zu entriegeln und die Bewegungsblockierung aufzuheben.

Die Steuerungseinrichtung 7 steuert weiterhin die für den Nutzer 15, die Besatzung 16 und/oder das weitere Personal 17 relevante Anzeigeeinrichtung 13a, 13b dazu an, zu initiierende Auslöseaktionen 18a, 18b anzuzeigen. Die zu initiierenden Auslöseaktionen 18a, 18b sind insbesondere Aufforderungen an den Nutzer 15, die Besatzung 16 und/oder das weitere Personal 17 über als nächstes auszuführende Maßnahmen. Die Steuerungseinrichtung 7 steuert die Anzeigeeinrichtung 13a, 13b auch dazu an, die Auslöseaktionen 18a, 18b insbesondere als Informationen anzuzeigen, die der Nutzer 15, die Besatzung 16 und/oder das weitere Personal 17 bereits vorgenommen hat. Weiterhin kann die Steuerungseinrichtung 7 die Anzeigeeinrichtung 13a, 13b dazu ansteuern, den aktuellen Türstatus, insbesondere ob die Türe geöffnet, geschlossen, entriegelt oder verriegelt ist, anzuzeigen.

Zwischen der autorisierten Stelle 22, welche den Bordcomputer des Flugzeugs 2, die - hier als autorisierte Instanz auftretende - Besatzung 16 / das weitere Personal 17 umfasst, der ersten Mensch-Maschine-Schnittstelle 10 und der zweiten Mensch-Maschine-Schnittstelle 11 besteht die Kommunikationsschnittstelle 21, mittels der Informationen zwischen der Steuerungseinrichtung 7 und der autorisierten Stelle 22 übermittelt werden können. Es können von der autorisierten Stelle 22 Eingabeinformationen 23 an die Steuerungseinrichtung 7 kommuniziert werden und/oder von der Steuerungseinrichtung 7 Ausgabeinformationen 24 an die autorisierte Stelle 22 übermittelt werden. Möglich ist auch ein wechselseitiger Austausch der Eingabe- und Ausgabeinformationen 23, 24.

Die Eingabeinformationen 23 umfassen Kommandos der autorisierten Stelle 22, insbesondere der Besatzung 16, des weiteren Personals 17 und/oder des Bordcomputers des Flugzeugs 2, mittels denen ein Zugriff der autorisierten Stelle 22 auf die Steuerungseinrichtung 7 gewährleistet ist. Die Steuerungseinrichtung 7 kann durch die autorisierte Stelle 22 mittels der Eingabeinformationen 23 dazu veranlasst werden, den Türaktuator 5 und/oder den Schlossaktuator 6 in entsprechender Weise anzusteuern. Dies erfolgt zum Beispiel in Abhängigkeit von Flugphasen wie Taxi, Start, Landung und/oder bei auftretenden Turbulenzen des Flugzeugs 2. Auch zur Wartung und/oder Reinigung des Raums 3 kann die autorisierte Stelle 22 entsprechende Eingabeinformationen 23 an die Steuerungseinrichtung 7 übermitteln. Weiterhin kann die Steuerungseinrichtung 7 durch die autorisierte Stelle 22 mittels der Eingabeinformationen 23 deaktiviert, insbesondere stromlos geschalten werden, sollte dies notwendig sein.

Die autorisierte Stelle 22 kann die Eingabeinformationen 23 über den Touchscreen der Anzeigeeinrichtung 13a, 13b eingeben und an die Steuerungseinrichtung 7 übermitteln. Über den Touchscreen und/oder über die Kommunikationsschnittstelle 21 kann die autorisierte Stelle 22 auch Inhalte von Dateien und/oder Speichermedien auf dem Speicher 14 abspeichern, welche von der Steuerungseinrichtung 7 abgerufen werden können. Hierzu kann eine Autorisierung, zum Beispiel durch Passworteingabe, durch die Besatzung 16 und/oder das weitere Personal 17 vorgesehen sein. Die Autorisierung kann über den Touchscreen oder über eine drahtlose Verbindung, beispielsweise near field communication, mit der entsprechenden Mensch-Maschine-Schnittstelle 10, 11, insbesondere über die Kommunikationsschnittstelle 21, vorgenommen werden. Die Steuerungseinrichtung 7 überprüft die Autorisierung und schaltet den Zugriff der autorisierten Stelle 22, insbesondere der Besatzung 16 und/oder des weiteren Personals 17, frei. Durch die Eingabe einer solchen Autorisierung wird also Besatzung 16 / weiteres Personals 17 zur autorisierten Stelle 22 bzw. erhält deren Funktionalität, Zugriffsrechte usw.

Die Ausgabeinformationen 24 können über die Anzeigeeinrichtung 13a, 13b oder über die Kommunikationsschnittstelle 21 an ein externes Ausgabegerät bei der autorisierten Stelle 22 ausgegeben, insbesondere angezeigt, werden. Beispielsweise können die Inhalte der Dateien und/oder der Speichermedien, die auf dem Speicher 14 abgespeichert wurden, als individuelle Anzeigen auf der jeweiligen Anzeigeeinrichtung 13a, 13b angezeigt werden.

Die Ausgabeinformationen 24 umfassen auch die umgesetzten Aktionen, die die Steuerungseinrichtung 7 infolge der Eingabeinformationen 23 vorgenommen hat. So können die Ausgabeinformationen 24 in Form des Türstatus und/oder der zu initiierten Aktionen durch den Nutzer 15 ausgegeben, insbesondere angezeigt, werden.

Die Ausgabeinformationen 24 umfassen weiterhin Statusmeldungen über Wartung, Instandhaltung, Fehler und/oder Notfall, welche auf der jeweiligen Anzeigeeinrichtung 13a, 13b und/oder auf dem externen Ausgabegerät der autorisierten Stelle 22 ausgegeben werden. Die Statusmeldungen können auf Basis eines Betriebszustands der Steuerungs- und Informationsanlage 1 erstellt werden. Der Betriebszustand kann in Abhängigkeit von Betriebsdaten des Türaktuators 5 und/oder des Schlossaktuators 6 ermittelt werden, welche von der Steuerungseinrichtung 7 erfasst und von der Auswerteeinrichtung 8 ausgewertet werden.

Die Betriebsdaten können Betriebszeiten, einen Stromverbrauch und/oder ein Antriebsmoment des Türaktuators 5 und/oder des Schlossaktuators 6 umfassen. Der Betriebszustand kann zum Beispiel auf Basis der ermittelten Betriebszeiten angeben, dass der Raum gereinigt und/oder gewartet werden muss und/oder dass ein Defekt von Komponenten der Steuerungs- und Informationsanlage 1 vorliegt. Eine Zeitüberschreitung der in der Steuerungseinrichtung 7 hinterlegten üblichen Betriebszeiten des Raums 3 kann insbesondere auf einen Notfall in dem Raum 3 oder auf eine blockierte Türe 4 hinweisen. Durch die übermittelten Ausgabeinformationen 24 kann die autorisierte Stelle 22 und auch der Nutzer 15 wichtige Meldungen erhalten und entsprechende Maßnahmen einleiten.

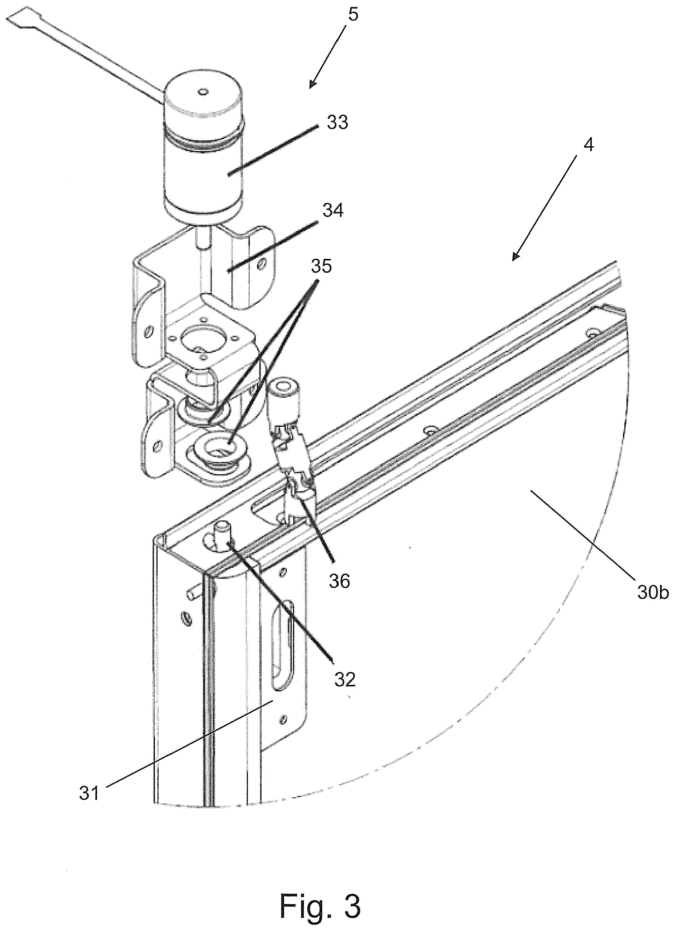

Die Figur 3 zeigt den Türaktuator 5 der Steuerungs- und Informationsanlage 1 in einer Explosionsdarstellung. Der Türaktuator 5 ist dazu ausgebildet, die Türe 4 zu öffnen und zu schließen. Gezeigt ist auch ein Ausschnitt des inneren Türblatts 30b der als Falttür ausgebildeten Türe 4. In dem inneren Türblatt 30b sind die Scharniereinrichtung 31 und eine Kupplung 32 verbaut.

Über die Kupplung 32 ist der Türaktuator 5 mechanisch mit der Türe 4 verbunden. Alternativ kann die Kupplung 32 so ausgebildet sein, dass die Türe 4 über die Kupplung 32 mechanisch mit der Wandstruktur 45 des Raums 3 verbunden ist und der Türaktuator 5 nicht über diese an die Türe 4 angebunden ist. Möglich ist auch, dass die Kupplung 32 von der Wandstruktur 45 gelöst werden kann, sodass die Türe 4 aus der Wandstruktur 45 entnommen werden kann.

Der Türaktuator 5 umfasst eine Antriebseinheit 33 mit einem Elektromotor und einem Getriebe, ein Gehäuse 34, zwei Gleitlager 35 und ein Doppelwellengelenk 36. Der Elektromotor der Antriebseinheit 33 ist an die Stromversorgung des Flugzeugs 2 angebunden. Das Doppelwellengelenk 36 ist mit der Scharniereinrichtung 31 wirkverbunden. Es überträgt ein durch den Elektromotor erzeugtes Drehmoment auf die Scharniereinrichtung 31, sodass dieses betätigt wird, das innere Türblatt 30b relativ zu dem äußeren Türblatt 30a (Figur 4) geschwenkt wird und die Türe 4 eine Öffnungs- oder Schließbewegung ausführt. Die Gleitlager 35 sind dazu ausgebildet, Querkräfte bei der Übertragung des Drehmoments durch das Doppelwellengelenk 36 abzufangen und ermöglichen ausschließlich eine Schwenkbewegung der Scharniereinrichtung 31.

In der Figur 4 ist eine perspektivische Draufsicht auf eine Innenseite der Türe 4 von einem Innenraum / dem Inneren des Raums 3 aus gezeigt. Eine Einbausituation der Verriegelungsanordnung 9 in der Türe 4 und in der Wandstruktur 45 ist schematisch durch Pfeile angezeigt, die in eine zusätzliche stilisierte Ansicht des Raumes 3 (gestrichelter Kasten rechts unten) weisen.

Die Verriegelungsanordnung 9 umfasst den Schlossaktuator 6 und die Verriegelungsvorrichtung 43. Die Verriegelungsvorrichtung 43 ist durch den Schlossaktuator 6 aktivierbar / bedienbar. Der Schlossaktuator 6 und die Verriegelungsvorrichtung 43 sind nacheinander und aufeinanderfolgend angeordnet. Sie erstrecken sich in der Einbausituation im Wesentlichen horizontal und/oder waagrecht zu einem Boden 40 des Raums 3.

Die Wandstruktur 45 umgibt den Raum 3 zumindest abschnittsweise, wobei in der Wandstruktur 45 die Türe 4 als Falttür angeordnet ist. Die Wandstruktur 45 weist den Wandabschnitt 44 auf, welcher angrenzend an das äußere Türblatt 30a der Türe 4 angeordnet ist. Das äußere Türblatt 30a ist relativ zum Wandabschnitt 44 schwenkbar. Über die Scharniereinrichtung 31 ist das innere Türblatt 30b mit dem äußeren Türblatt 30a schwenkbar verbunden.

Der Schlossaktuator 6 ist in dem Wandabschnitt 44 integriert. Die Verriegelungsvorrichtung 43 ist in dem äußeren Türblatt 30a integriert. Es ist auch die erste Mensch-Maschine-Schnittstelle 10 gezeigt, welche an dem Wandabschnitt 44 im Innenraum des Raums 3 angeordnet ist.

In der Figur 5a ist eine Draufsicht auf eine Vorderseite V der Verriegelungsanordnung 9 und in der Figur 5b eine Draufsicht auf eine Rückseite S der Verriegelungsanordnung 9 gezeigt. Die Verriegelungsanordnung 9 weist einen entriegelten Zustand auf. Die Figur 6 zeigt die Draufsichten auf die Vorderseite V (Figur 6a) und Rückseite S (Figur 6b) der Verriegelungsanordnung 9, wobei diese einen verriegelten Zustand aufweist.

Gemäß der Figuren 5 und 6 erstreckt sich die Verriegelungsanordnung 9, wie in der Figur 4 beschrieben, in dem Wandabschnitt 44 und in dem äußeren Türblatt 30a, wobei das Türblatt 30a und der Wandabschnitt 44 zeichnerisch unterdrückt sind. Die Vorderseite V ist zu dem Innenraum des Raums 3 gerichtet und die Rückseite S nach außerhalb des Raums 3.

Die Verriegelungsanordnung 9 weist den Schlossaktuator 6 auf. Der Schlossaktuator 6 umfasst den ersten Positionssensor 25, welcher die absolute Türposition der Türe 4 erfasst. Der Schlossaktuator 6 übermittelt die Türposition als das erste Positionssignal 28 an die Steuerungseinrichtung 7 der Steuerungs- und Informationsanlage 1.

Der Schlossaktuator 6 umfasst ein Gehäuse 38, ein erstes Stellelement 27 in Form eines ersten Bolzens, ein zweites Stellelement 41 in Form eines zweiten Bolzens und ein erstes Zahnrad 42. Das erste Stellelement 27 und das zweite Stellelement 41 sind in dem Gehäuse 38 (bezogen auf die Längsachse bzw. -erstreckungsrichtung der Bolzen, Richtungen R1,2) gleichgerichtet und/oder parallel zueinander aufgenommen, wobei sich beide Stellelemente 27, 41 im Wesentlichen waagerecht und/oder horizontal gegenüber dem Boden 40 erstrecken. Das erste Stellelement 27 und das zweite Stellelement 41 sind translatorisch beweglich in dem Gehäuse 38 angeordnet bzw. geführt / gelagert, wobei sie sich abschnittsweise aus dem Gehäuse 38 herausbewegen können. Beide Stellelemente 27, 41 sind mittels des ersten Zahnrads 42 wirkverbunden. Hierfür weisen beide Stellelemente 27, 41 auf ihren aufeinander zu gerichteten Außenseiten Außenverzahnungen auf, mit denen das erste Zahnrad 42 kämmen kann.

Der Schlossaktuator 6 weist eine Antriebseinrichtung 37 mit einem Elektromotor zur Erzeugung eines Drehmoments auf. Die Antriebseinrichtung 37 umfasst eine Spindeleinrichtung 39, z.B. eine Steilgewindespindel, welche das Drehmoment in eine lineare Kraft umwandelt und nicht-selbsthemmend auf das erste Stellelement 27 überträgt. Hierzu greift die Spindeleinrichtung 39 in das erste Stellelement 27 ein, indem sie in einem Hohlraum des ersten Stellelements 27 angeordnet ist.

Bei Einleitung der linearen Kraft in das erste Stellelement 27 wird dieses in eine erste lineare Richtung R1 zu dem äußeren Türblatt 30a hin bewegt. Aufgrund der Wirkverbindung über das erste Zahnrad 42 wird das zweite Stellelement 41 bei bzw. während der Bewegung des ersten Stellelements 27 simultan und synchron gegenläufig in eine zweite entgegengesetzte lineare Richtung R2 von dem äußeren Türblatt 30a weg bewegt.

Die Verriegelungsanordnung 9 umfasst die Verriegelungsvorrichtung 43. Die Verriegelungsvorrichtung 43 weist ein weiteres Gehäuse 50 auf. Sie umfasst ein Blockierelement 47, welches als ein Blockierriegel ausgebildet ist. Die Verriegelungsvorrichtung 43 weist weiterhin ein Verschlusselement 49 auf, welches als ein Verschlussriegel ausgebildet ist.

Das Blockierelement 47 und das Verschlusselement 49 sind in dem weiteren Gehäuse 50 (bezogen auf ihre Längserstreckungs- bzw. Bewegungsrichtungen B, G) gleichgerichtet und/oder parallel zueinander aufgenommen, wobei sich beide Elemente 47, 49 im Wesentlichen waagerecht und/oder horizontal gegenüber dem Boden 40 erstrecken. Das Blockierelement 47 und das Verschlusselement 49 sind translatorisch beweglich in dem Gehäuse 50 angeordnet, wobei sie sich abschnittsweise aus dem Gehäuse 50 herausbewegen können. Beide Elemente 47, 49 sind mittels eines zweiten Zahnrads 51 wirkverbunden. Hierfür weisen beide Elemente 47, 49 auf ihren aufeinander zu gerichteten Außenseiten Außenverzahnungen auf, mit denen das zweite Zahnrad 51 kämmen kann.

Das Blockierelement 47 kann von einer in der Figur 5a,b gezeigten Bewegungsstellung in eine in der Figur 6a,b gezeigte Blockierstellung überführt werden. In der Blockierstellung gemäß der Figur 6a,b greift das Blockierelement 47 in die Scharniereinrichtung 31 ein und blockiert dadurch eine Türbewegung der Türe 4, insbesondere eine Öffnungsbewegung und eine Schließbewegung. In der Bewegungsstellung gemäß der Figur 5 ist das Blockierelement 47 außerhalb der Scharniereinrichtung 31 in dem äußeren Türblatt 30a angeordnet, sodass die Türbewegung möglich ist.

Zur Überführung des Blockierelements 47 in die Blockierstellung kann es in eine Blockierrichtung B bewegt werden. Die Blockierrichtung B entspricht der ersten linearen Richtung R1. Durch Bewegung des Blockierelements 47 in eine Gegenrichtung zur Blockierrichtung B, nämlich die Verschlussrichtung G, kann dieses in die Bewegungsstellung überführt werden. Die Verschlussrichtung G entspricht der zweiten linearen Richtung R2.

Das Verschlusselement 49 kann von einer in der Figur 5 gezeigten Entriegelungsstellung, in der die Türe 4 entriegelt ist, in eine in der Figur 6 gezeigten Verriegelungsstellung, in der die Türe 4 verriegelt ist, überführt werden. In der Verriegelungsstellung gemäß der Figur 6 greift das Verschlusselement 49 in den Wandabschnitt 44 ein. In der Entriegelungsstellung gemäß der Figur 5 ist das Verschlusselement 49 außerhalb des Wandabschnitts 44 in dem äußeren Türblatt 30a angeordnet. Zur Überführung des Verschlusselements 49 in die Verriegelungsstellung kann dieses in die Verschlussrichtung G bewegt werden. Durch Bewegung entgegen der Verschlussrichtung G (in die Blockierrichtung B) kann das Verschlusselement 49 in die Entriegelungsstellung überführt werden.

Aufgrund der Wirkverbindung über das zweite Zahnrad 51 wird das Verschlusselement 49 bei und während der Bewegung des Blockierelements 47 in die Blockierrichtung B simultan und/oder synchron gegenläufig in die Verschlussrichtung G bewegt und umgekehrt.

Das erste Stellelement 27 fluchtet mit dem Blockierelement 47, sodass ein in die erste lineare Richtung R1 gerichtetes Ende des ersten Stellelements 27 benachbart / angrenzend zu und unverbunden mit einem entgegen der Richtung R1 gerichteten Ende des Blockierelements 47 angeordnet ist. Die beiden Enden sind in der Bewegungsstellung des Blockierelements 47 gemäß der Figur 5 zwischen dem Wandabschnitt 44 und dem äußeren Türblatt 30a angeordnet. Somit ist eine Schwenkung des äußeren Türblatts 30a relativ zu dem Wandabschnitt 44 in der Bewegungsstellung möglich. Dadurch, dass die Enden unverbunden sind, kann das erste Stellelement 27 ausschließlich eine Druckkraft in Richtung R1, also keine Zugkraft entgegen der Richtung R1, auf das Blockierelement 47 übertragen.

Das zweite Stellelement 41 fluchtet mit dem Verschlusselement 49, sodass ein entgegen der Richtung R2 gerichtetes Ende des zweiten Stellelements 27 benachbart / angrenzend zu und unverbunden mit einem in Richtung R2 gerichteten Ende des Verschlusselements 49 angeordnet ist. Die beiden Enden sind in der Entriegelungsstellung des Verschlusselements 49 gemäß der Figur 5 zwischen dem Wandabschnitt 44 und dem äußeren Türblatt 30a angeordnet. Somit ist eine Schwenkung des äußeren Türblatts 30a relativ zu dem Wandabschnitt 44 in der Bewegungsstellung ermöglich. Dadurch, dass die Enden unverbunden sind, kann das zweite Stellelement 41 ausschließlich eine Druckkraft, also keine Zugkraft, auf das Verschlusselement 49 übertragen.

Der Übergang von der Situation aus Figur 5 (Tür entriegelt) zur Situation aus Figur 6 (Tür verriegelt) erfolgt derart:
Bei / während der Übertragung der linearen Kraft durch die Spindeleinrichtung 39 wird das erste Stellelement 27 in die erste lineare Richtung R1 bewegt. Dabei verschiebt es mit diesem unverbunden und ausschließlich durch anliegenden Druck das Blockierelement 47 in die Blockierrichtung B und überführt es von der Bewegungsstellung in die Blockierstellung. Mittels des ersten Zahnrads 42 wird das zweite Stellelement 41 synchron / simultan gegenläufig zu dem ersten Stellelement 27 in die zweite lineare Richtung R2 bewegt. Das Verschlusselement 49 wird mittels des zweiten Zahnrads 51 synchron / simultan gegenläufig zu dem Blockierelement 47 in die Verschlussrichtung G von der Entriegelungsstellung in die Verriegelungsstellung bewegt.

Der Übergang von der Situation aus Figur 6 (Tür verriegelt) zur Situation aus Figur 5 (Tür entriegelt) erfolgt derart:
Bei Änderung der Drehrichtung der Spindeleinrichtung 39 wird das erste Stellelement 27 entgegen der ersten lineare Richtung R1 zurückbewegt. Dabei wird das zweite Stellelement 41 mittels des ersten Zahnrads 42 gegenläufig entgegen der zweiten linearen Richtung R2 bewegt, sodass das zweite Stellelement 41 das Verschlusselement 49 entgegen der Verschlussrichtung G von der Verriegelungsstellung in die Entriegelungsstellung verschiebt. Dies geschieht wiederum alleine durch Druck / Anlage ohne Verbindung zwischen beiden Bauteilen. Mittels des zweiten Zahnrads 51 wird das Blockierelement 47 gegenläufig entgegen der Blockierrichtung B bewegt und von der Blockierstellung in die die Bewegungsstellung überführt.

Zur Überführung des Blockierelements 47 in die Blockierstellung und zur Überführung des Verschlusselements 49 in die Verriegelungsstellung wird als von dem ersten Stellelement 27 eine Schubkraft auf das Blockierelement 47 übertragen. Zur Überführung des Verschlusselements 49 in die Entriegelungsstellung und zur Überführung des Blockierelements 47 in die Bewegungsstellung wird durch das zweiten Stellelement 41 eine Schubkraft auf das Verschlusselement 49 übertragen.

Der Schlossaktuator 6 umfasst den ersten und den zweiten Positionssensor 25, 26 und übermittelt die Position des ersten Stellelements 27 als das erste Positionssignal 28 und die Türposition als das zweite Positionssignal 29 an die Steuerungseinrichtung 7 der Steuerungs- und Informationsanlage 1.

Die Verriegelungsvorrichtung 43 kann zusätzlich zu dem Schlossaktuator 6 manuell betätigt werden. Dies ist durch die nicht-selbsthemmende Kraftübertragung der Antriebseinrichtung 37 möglich. Zur manuellen Betätigung weist die Verriegelungsvorrichtung 43 ein auf der Außenseite bzw. Rückseite S und auf der Vorderseite V verdeckt angeordnetes Griffelement auf. Dies hat den Vorteil, dass die Türe 4 bei einem Defekt des Schlossaktuators 6 oder bei einem Stromausfall entriegelt und geöffnet bzw. geschlossen und verriegelt werden kann. Das Griffelement steht mit dem Verschlusselement 49 in einer Wirkverbindung, sodass bei einer Betätigung, z.B. bei einem Verschieben des Griffelements, das Verschlusselement 49 in die Verschlussrichtung G oder in die Blockierrichtung B bewegbar ist und sodass das über das zweite Zahnrad 51 wirkverbundene Blockierelement 47 entsprechend synchron gegenläufig bewegbar ist. Die Stellelemente 27, 41 des Schlossaktuators 6 werden wie zuvor beschrieben entsprechend mitbewegt.

Die Verriegelungsanordnung 9 umfasst eine Hinweiseinrichtung 52. Die Hinweiseinrichtung 52 weist ein Hinweiselement 53 auf. Das Hinweiselement 53 gibt auf der Außenseite / Rückseite S und optional ergänzend auf der Vorderseite V durch eine Aussparung in dem äußeren Türblatt 30a einen Hinweis aus, ob die Türe 4 verriegelt und der Raum 3 besetzt ist oder ob die Türe 4 entriegelt und der Raum 3 frei ist. Das Hinweiselement 53 ist mit dem Griffelement und/oder mit dem Verschlusselement 49 gekoppelt, sodass es gemeinsam mit diesem beweglich bzw. verstellbar ist und in Abhängigkeit der Verriegelungsstellung oder der Entriegelungsstellung den entsprechenden Hinweis ausgibt.

### Bezugszeichenliste

- 1: Steuerungs- und Informationsanlage
- 2: Flugzeug
- 3: Raum
- 4: Türe
- 5: Türaktuator
- 6: Schlossaktuator
- 7: Steuerungseinrichtung
- 8: Auswerteeinrichtung
- 9: Verriegelungsanordnung
- 10: erste Mensch-Maschine-Schnittstelle
- 11: zweite Mensch-Maschine-Schnittstelle
- 12a, 12b: Sensoreinrichtungen
- 13a, 13b: Anzeigeeinrichtungen
- 14: Speicher
- 15: Nutzer
- 16: Besatzung
- 17: weiteres Personal
- 18a, 18b: Auslöseaktion
- 19a, 19b: Auslösesignal
- 20: Geste
- 21: Kommunikationsschnittstelle
- 22: autorisierte Stelle
- 23: Eingabeinformationen
- 24: Ausgabeinformationen
- 25: erster Positionssensor
- 26: zweiter Positionssensor
- 27: erstes Stellelement
- 28: Positionssignal des ersten Positionssensors
- 29: Positionssignal des zweiten Positionssensors
- 30a: äußeres Türblatt
- 30b: inneres Türblatt
- 31: Scharniereinrichtung
- 32: Kupplung
- 33: Antriebseinheit des Türaktuators
- 34: Gehäuse Türaktuator
- 35: Gleitlager für das Doppelwellengelenk
- 36: Doppelwellengelenk
- 37: Antriebseinrichtung des Schlossaktuators
- 38: Gehäuse Schlossaktuator
- 39: Spindeleinrichtung
- 40: Boden
- 41: zweites Stellelement
- 42: erstes Zahnrad
- 43: Verriegelungsvorrichtung
- 44: Wandabschnitt
- 45: Wandstruktur
- 47: Blockierelement
- 49: Verschlusselement
- 50: weiteres Gehäuse
- 51: zweites Zahnrad
- 52: Hinweiseinrichtung
- 53: Hinweiselement

- B: Blockierrichtung
- G: Verschlussrichtung
- R1: erste lineare Richtung
- R2: zweite lineare Richtung
- S: Rückseite
- V: Vorderseite

## Patentansprüche

1. Türanordnung zur Integration in einem Flugzeug (2),
- mit einer Wandstruktur (45), die dazu eingerichtet ist, einen bestimmungsgemäßen Raum (3) des Flugzeuges (2) zumindest abschnittsweise zu umschließen,
- mit einer in der Wandstruktur (45) angeordneten Türe (4) für den Raum (3),
- wobei die Wandstruktur (45) einen seitlich neben der Türe (4) angeordneten Wandabschnitt (44) aufweist, und die Türe (4) mindestens ein Türblatt (30a,b) aufweist, das relativ zum Wandabschnitt (44) zwischen einer Schließstellung und einer Öffnungsstellung verschwenkbar ist,
- mit einer Verriegelungsanordnung (9) für die Türe (4), die enthält
- eine Verriegelungsvorrichtung (43), die in dem Türblatt (30a, 30b) angeordnet ist, und die ein Blockierelement (47) enthält, das durch Bewegung in eine Blockierrichtung (B) in eine Blockierstellung überführbar ist, in welcher eine Bewegung der Türe (4) in der Schließstellung blockiert ist, und durch Bewegung entgegen der Blockierrichtung (B) in eine Bewegungsstellung überführbar ist, in welcher die Bewegung der Türe (4) aus der Schließstellung heraus möglich ist,
- einen Schlossaktuator (6), der im Wandabschnitt (44) angeordnet ist, der ein erstes mechanisches Stellelement (27) enthält, das mit dem Blockierelement (47) unverbunden ist, und das dazu eingerichtet ist, das Blockierelement (47) durch mechanischen Anlage-Druck von der Bewegungsstellung in die Blockierstellung oder von der Blockierstellung in die Bewegungsstellung zu überführen,
**dadurch gekennzeichnet, dass**
die Verriegelungsvorrichtung (43) ein Verschlusselement (49) enthält, das durch Bewegung in eine Verschlussrichtung (G) in eine Verriegelungsstellung überführbar ist, in welcher die Türe (4) verriegelt ist, und durch Bewegung entgegen der Verschlussrichtung (G) in eine Entriegelungsstellung überführbar ist, in der die Türe (4) entriegelt ist,
- der Schlossaktuator (6) ein zweites mechanisches Stellelement (41) enthält, das mit dem Verschlusselement (49) unverbunden ist, und das dazu eingerichtet ist, das Verschlusselement (49) durch mechanischen Anlage-Druck von der Entriegelungsstellung in die Verriegelungsstellung oder von der Verriegelungsstellung in die Entriegelungsstellung zu überführen,
- das erste Stellelement (27) und das zweite Stellelement (41) dazu eingerichtet sind, synchron gegenläufig zueinander linear bewegt zu werden.

2. Türanordnung nach Anspruch 1,
**dadurch gekennzeichnet, dass**
das erste Stellelement (27) und auch das zweite Stellelement (41) in der Schließstellung der Türe (4) in Richtung zur Verriegelungsvorrichtung (43) hin und zurück bewegbar sind.

3. Türanordnung nach einem der Ansprüche 1 oder 2,
**dadurch gekennzeichnet, dass**
das erste Stellelement (27) linear fluchtend zu der Blockierrichtung (B) bewegbar ist und das zweite Stellelement (41) linear fluchtend zu der Verschlussrichtung (G) bewegbar ist.

4. Türanordnung nach einem der vorhergehenden Ansprüche,
**dadurch gekennzeichnet, dass**
das Verschlusselement (49) und das Blockierelement (47) derart bewegungsgekoppelt sind, dass sie ausschließlich synchron gegenläufig zueinander linear bewegbar sind.

5. Türanordnung nach einem der vorhergehenden Ansprüche,
**dadurch gekennzeichnet, dass**
die Verriegelungsanordnung (9) eine elektrische Antriebseinrichtung (37) enthält, die nicht selbsthemmend ausgebildet ist und die dazu eingerichtet ist, das Blockierelement (47) und das Verschlusselement (49) zu bewegen.

6. Türanordnung nach einem der vorhergehenden Ansprüche,
**dadurch gekennzeichnet, dass**
die Türe (4) eine Falttüre mit einem äußeren Türblatt (30a) und mit einem inneren Türblatt (30b) ist, wobei das äußere (30a) und das innere Türblatt (30b) über eine Scharniereinrichtung (31) schwenkbar miteinander verbunden sind, wobei nur das äußere Türblatt (30a) an den Wandabschnitt (44) angrenzt, wobei das Blockierelement (47) in der Blockierstellung die Türe (4) blockierend in die Scharniereinrichtung (31) eingreift und das Verschlusselement (49) in der Verriegelungsstellung die Türe (4) blockierend in den Wandabschnitt (44) eingreift.

7. Türanordnung nach einem der Ansprüche 1 bis 5,
**dadurch gekennzeichnet, dass**
die Türe (4) eine Schwenk- und/oder Flügeltüre mit genau einem Türblatt (30a) ist, wobei das Türblatt (30a) an den Wandabschnitt (44) angrenzt, wobei das Blockierelement (47) in der Blockierstellung und das Verschlusselement (49) in der Verriegelungsstellung die Türe (4) blockierend in den Wandabschnitt (44) eingreift.

8. Steuerungs- und Informationsanlage (1) für einen Raum (3) eines Flugzeugs (2), wobei der Raum (3) eine Türe (4) umfasst,
- mit der Türanordnung (9) nach einem der Ansprüche 1 bis 7,
- mit einer Steuerungseinrichtung (7),
- mit mindestens einer Mensch-Maschine-Schnittstelle (10, 11) zur Erfassung einer Auslöseaktion (18a, 18b) eines Nutzers (15) der Türe (4) und zur Übermittlung der Auslöseaktion (18a, 18b) als Auslösesignal (19a, 19b) an die Steuerungseinrichtung (7),
- wobei die Steuerungseinrichtung (7) zur Ansteuerung des Schlossaktuators (6) in Abhängigkeit des Auslösesignals (19a, 19b) ausgebildet ist,
- mit mindestens einer Kommunikationsschnittstelle (21) zur Übermittlung von Eingabeinformationen (23) einer vom Nutzer (15) verschiedenen autorisierten Stelle (22) an die Steuerungseinrichtung (7) und optional auch zur Übermittlung von Ausgabeinformationen (24) der Steuerungseinrichtung (7) an die autorisierte Stelle (22).

9. Steuerungs- und Informationsanlage (1) nach Anspruch 8,
**dadurch gekennzeichnet, dass**
- die Türanordnung einen ersten Positionssensor (25) zur Erfassung der Position des ersten Stellelements (27) und des zweiten Stellelements (41) umfasst und/oder einen zweiten Positionssensor (26) zur Erfassung einer Türposition der Türe (4) umfasst, und
- die Türanordnung einen Türaktuator (5) zum Öffnen und Schließen der Türe (4) enthält,
- wobei die Positionssensoren (25,26) signaltechnisch mit der Steuerungseinrichtung (7) zur Übermittlung der Position des ersten Stellelements (27) als ein erstes Positionssignal (28) und/oder zur Übermittlung der Türposition als ein zweites Positionssignal (29) verbunden ist, wobei die Steuerungseinrichtung (7) dazu ausgebildet ist, den Schlossaktuator (6) und/oder den Türaktuator (5) auf Basis des ersten Positionssignals (28) und/oder des zweiten Positionssignals (29) anzusteuern.

10. Steuerungs- und Informationsanlage (1) nach Anspruch 8 oder 9,
**dadurch gekennzeichnet, dass**
die mindestens eine Mensch-Maschine-Schnittstelle (10, 11) eine Anzeigeeinrichtung (13a, 13b) zur Anzeige der Eingabeinformationen (23) und/oder der Ausgabeinformationen (24) und eine Kommunikationsschnittstelle (21) zur Übermittlung der Eingabeinformationen (23) an die Steuerungseinrichtung (7) und/oder zur Übermittlung der Ausgabeinformationen (24) an die autorisierte Stelle (22) umfasst.

11. Raum (3) zur Integration in ein Flugzeug (2),
mit einer Türanordnung nach einem der Ansprüche 1 bis 7 oder mit einer Steuerungs- und Informationsanlage (1) nach einem der Ansprüche 8 bis 10.

12. Flugzeug (2),
mit einer Türanordnung nach einem der Ansprüche 1 bis 7 oder mit einer Steuerungs- und Informationsanlage (1) nach einem der Ansprüche 8 bis 10 oder mit dem Raum (3) nach Anspruch 12.

## Claims

1. Door arrangement for integration in an aircraft (2),
- having a wall structure (45) which is configured to at least partially surround a compartment (3) of the aircraft (2) according to specifications,
- having a door (4) which is arranged in the wall structure (45) for the compartment (3),
- wherein the wall structure (45) has a wall portion (44) which is arranged laterally beside the door (4), and the door (4) has at least one door leaf (30a, b) which can be pivoted relative to the wall portion (44) between a closed position and an open position,
- having a locking arrangement (9) for the door (4) which contains
- a locking apparatus (43) which is arranged in the door leaf (30a, 30b) and which contains a blocking element (47) which can, by being moved in a blocking direction (B), be moved into a blocking position, in which a movement of the door (4) is blocked in the closed position, and which, by being moved counter to the blocking direction (B), can be moved into a movement position, in which the movement of the door (4) out of the closed position is possible,
- a lock actuator (6) which is arranged in the wall portion (44) and which contains a first mechanical actuation element (27) which is not connected to the blocking element (47) and which is configured to move the blocking element (47) by mechanical application pressure from the movement position into the blocking position and/or from the blocking position into the movement position,
**characterized in that**
the locking apparatus (43) contains a closure element (49) which can be moved into a locking position, in which the door (4) is locked, by movement in a closing direction (G), and which, by being moved counter to the closing direction (G), can be moved into an unlocking position, in which the door (4) is unlocked,
- the lock actuator (6) contains a second mechanical actuation element (41) which is not connected to the closure element (49) and which is configured to move the closure element (49) from the unlocking position into the locking position and/or from the locking position into the unlocking position by mechanical application pressure,
- the first actuation element (27) and the second actuation element (41) are configured to be moved linearly and synchronously in opposite directions relative to each other.

2. Door arrangement according to Claim 1,
**characterized in that**
the first actuation element (27) and also the second actuation element (41) is/are movable back and forth in the closed position of the door (4) in the direction toward the locking apparatus (43).

3. Door arrangement according to either of Claims 1 and 2,
**characterized in that**
the first actuation element (27) is movable in a linearly aligned manner with respect to the blocking direction (B) and the second actuation element (41) is movable in a linearly aligned manner with respect to the closing direction (G).

4. Door arrangement according to one of the preceding claims,
**characterized in that**
the closure element (49) and the blocking element (47) are coupled in terms of movement so that they can be moved exclusively in a linear and synchronous manner in opposite directions relative to each other.

5. Door arrangement according to one of the preceding claims,
**characterized in that**
the locking arrangement (9) comprises an electrical drive device (37) which is constructed in a non-self-locking manner and which is configured to move the blocking element (47) and the closure element (49).

6. Door arrangement according to one of the preceding claims,
**characterized in that**
the door (4) is a folding door having an external door leaf (30a) and having an internal door leaf (30b), wherein the external door leaf (30a) and the internal door leaf (30b) are pivotably connected to each other via a hinge device (31), wherein only the external door leaf (30a) adjoins the wall portion (44), wherein the blocking element (47) engages in the blocking position in the hinge device (31) so as to block the door (4) and the closure element (49) engages in the wall portion (44) in the locking position so as to block the door (4).

7. Door arrangement according to one of Claims 1 to 5,
**characterized in that**
the door (4) is a pivoting door and/or double-wing door with precisely one door leaf (30a), wherein the door leaf (30a) adjoins the wall portion (44), wherein the blocking element (47) engages in the wall portion (44) in the blocking position and the closure element (49) engages in the wall portion (44) in the locking position so as to block the door (4).

8. Control and information system (1) for a compartment (3) of an aircraft (2), wherein the compartment (3) comprises a door (4),
- having the door arrangement (9) according to one of Claims 1 to 7,
- having a control device (7),
- having at least one human/machine interface (10, 11) for detecting a triggering action (18a, 18b) of a user (15) of the door (4) and for transmitting the triggering action (18a, 18b) as a triggering signal (19a, 19b) to the control device (7),
- wherein the control device (7) is constructed to control the lock actuator (6) in accordance with the triggering signal (19a, 19b),
- having at least one communication interface (21) for transmitting input information items (23) of an authorized location (22) which is different from the user (15) to the control device (7) and optionally also for transmitting output information items (24) of the control device (7) to the authorized location (22).

9. Control and information system (1) according to Claim 8,
**characterized in that**
- the door arrangement comprises a first position sensor (25) for detecting the position of the first actuation element (27) and of the second actuation element (41) and/or a second position sensor (26) for detecting a door position of the door (4) and
- the door arrangement contains a door actuator (5) for opening and closing the door (4),
- wherein the position sensors (25, 26) are connected to the control device (7) in technical signal terms in order to transmit the position of the first actuation element (27) as a first position signal (28) and/or to transmit the door position as a second position signal (29), wherein the control device (7) is constructed to control the lock actuator (6) and/or the door actuator (5) on the basis of the first position signal (28) and/or the second position signal (29).

10. Control and information system (1) according to Claim 8 or 9,
**characterized in that**
the at least one human/machine interface (10, 11) comprises a display device (13a, 13b) for displaying the input information items (23) and/or the output information items (24) and a communication interface (21) for transmitting the input information items (23) to the control device (7) and/or for transmitting the output information items (24) to the authorized location (22).

11. Compartment (3) for integration in an aircraft (2), having a door arrangement according to one of Claims 1 to 7 or having a control and information system (1) according to one of Claims 8 to 10.

12. Aircraft (2)
having a door arrangement according to one of Claims 1 to 7 or having a control and information system (1) according to one of Claims 8 to 10, or having the compartment according to Claim 12.

## Revendications

1. Ensemble formant porte destiné à être intégré dans un avion (2),
- comprenant une structure de paroi (45) qui est conçue pour entourer au moins partiellement un espace (3) de l'avion (2) prévu à cet effet,
- avec une porte (4) pour l'espace (3) agencée dans la structure de paroi (45),
- la structure de paroi (45) présentant une partie de paroi (44) agencée latéralement à côté de la porte (4), et la porte (4) présentant au moins un panneau de porte (30a, b) qui est apte à pivoter par rapport à la partie de paroi (44) entre une position de fermeture et une position d'ouverture,
- avec un système de verrouillage (9) pour la porte (4), qui comprend
- un dispositif de verrouillage (43) qui est disposé dans le panneau de porte (30a, 30b), et
qui contient un élément de blocage (47) qui, par un mouvement dans une direction de blocage (B), est apte à être amené dans une position de blocage dans laquelle un mouvement de la porte (4) dans la position de fermeture est bloqué, et qui, par un mouvement dans le sens contraire à la direction de blocage (B), est apte à être amené dans une position de mouvement dans laquelle le mouvement de la porte (4) est possible hors de la position de fermeture,
- un actionneur de serrure (6) qui est disposé dans la partie de paroi (44), qui contient un premier élément de réglage mécanique (27) qui n'est pas relié à l'élément de blocage (47) et qui est conçu pour faire passer l'élément de blocage (47) de la position de mouvement à la position de blocage ou de la position de blocage à la position de mouvement par une pression mécanique d'application,
**caractérisé en ce que**
le dispositif de verrouillage (43) comprend un élément de fermeture (49) qui, par un mouvement dans une direction de fermeture (G), est apte à être amené dans une position de verrouillage dans laquelle la porte (4) est verrouillée, et qui, par un mouvement dans le sens inverse de la direction de fermeture (G), est apte à être amené dans une position de déverrouillage dans laquelle la porte (4) est déverrouillée,
- l'actionneur de serrure (6) comprend un deuxième élément de réglage mécanique (41) qui n'est pas relié à l'élément de fermeture (49) et qui est conçu pour faire passer l'élément de fermeture (49) de la position de déverrouillage à la position de verrouillage ou de la position de verrouillage à la position de déverrouillage par une pression d'appui mécanique,
- le premier élément de réglage (27) et le deuxième élément de réglage (41) sont conçus pour être déplacés linéairement de manière synchrone en sens inverse l'un par rapport à l'autre.

2. Ensemble formant porte selon la revendication 1,
**caractérisé en ce que**
le premier élément de réglage (27) et également le deuxième élément de réglage (41) sont mobiles en va-et-vient en direction du dispositif de verrouillage (43) dans la position de fermeture de la porte (4).

3. Ensemble formant porte selon l'une des revendications 1 ou 2,
**caractérisé en ce que**
le premier élément de réglage (27) est mobile en alignement linéaire avec la direction de blocage (B) et le deuxième élément de réglage (41) est mobile en alignement linéaire avec la direction de fermeture (G).

4. Ensemble formant porte selon l'une des revendications précédentes,
**caractérisé en ce que**
l'élément de fermeture (49) et l'élément de blocage (47) sont reliés en mouvement de telle sorte qu'ils peuvent être déplacés linéairement de manière exclusivement synchrone en sens inverse l'un par rapport à l'autre.

5. Ensemble formant porte selon l'une des revendications précédentes,
**caractérisé en ce que**
le système de verrouillage (9) comprend un dispositif d'entraînement électrique (37) qui n'est pas autobloquant et qui est conçu pour déplacer l'élément de blocage (47) et l'élément de fermeture (49).

6. Ensemble formant porte selon l'une des revendications précédentes,
**caractérisé en ce que**
la porte (4) est une porte pliante avec un panneau de porte extérieur (30a) et avec un panneau de porte intérieur (30b), le panneau de porte extérieur (30a) et le panneau de porte intérieur (30b) étant reliés entre eux de manière pivotante par un dispositif de charnière (31), seul le panneau de porte extérieur (30a) étant adjacent à la partie de paroi (44), l'élément de blocage (47) s'engageant dans le dispositif de charnière (31) en bloquant la porte (4) dans la position de blocage et l'élément de fermeture (49) s'engageant dans la partie de paroi (44) en bloquant la porte (4) dans la position de verrouillage.

7. Ensemble formant porte selon l'une des revendications 1 à 5,
**caractérisé en ce que**
la porte (4) est une porte pivotante et/ou battante avec exactement un panneau de porte (30a), le panneau de porte (30a) étant adjacent à la partie de paroi (44), l'élément de blocage (47) en position de blocage et l'élément de fermeture (49) en position de verrouillage engageant la porte (4) dans la partie de paroi (44) en la bloquant.

8. Installation de commande et d'information (1) pour un espace (3) d'un avion (2), l'espace (3) comprenant une porte (4),
- avec le système de verrouillage (9) selon l'une des revendications 1 à 7,
- avec un dispositif de commande (7),
- avec au moins une interface homme-machine (10, 11) pour détecter une action de déclenchement (18a, 18b) d'un utilisateur (15) de la porte (4) et pour transmettre l'action de déclenchement (18a, 18b) sous forme de signal de déclenchement (19a, 19b) au dispositif de commande (7),
- le dispositif de commande (7) étant conçu pour commander l'actionneur de serrure (6) en fonction du signal de déclenchement (19a, 19b),
- avec au moins une interface de communication (21) pour la transmission d'informations d'entrée (23) d'un poste autorisé (22) différent de l'utilisateur (15) au dispositif de commande (7) et, en option, également pour la transmission d'informations de sortie (24) du dispositif de commande (7) au poste autorisé (22).

9. Installation de commande et d'information (1) selon la revendication 8,
**caractérisé en ce que**
- l'agencement de porte comprend un premier capteur de position (25) pour détecter la position du premier élément de réglage (27) et du deuxième élément de réglage (41) et/ou comprend un deuxième capteur de position (26) pour détecter une position de porte de la porte (4), et
- l'agencement de porte comprend un actionneur de porte (5) pour ouvrir et fermer la porte (4),
- les capteurs de position (25, 26) étant reliés par une technique de signalisation au dispositif de commande (7) pour transmettre la position du premier élément de réglage (27) comme premier signal de position (28) et/ou pour transmettre la position de la porte comme deuxième signal de position (29), le dispositif de commande (7) étant conçu pour commander l'actionneur de serrure (6) et/ou l'actionneur de porte (5) sur la base du premier signal de position (28) et/ou du deuxième signal de position (29).

10. Installation de commande et d'information (1) selon la revendication 8 ou 9,
**caractérisé**
**en ce qu'**au moins une interface homme-machine (10, 11) comprend un dispositif d'affichage (13a, 13b) pour afficher les informations d'entrée (23) et/ou les informations de sortie (24) et une interface de communication (21) pour la transmission des informations d'entrée (23) au dispositif de commande (7) et/ou pour la transmission des informations de sortie (24) au poste autorisé (22).

11. Espace (3) destiné à être intégré dans un avion (2),
comprenant un ensemble formant porte selon l'une des revendications 1 à 7 ou comprenant une installation de commande et d'information (1) selon l'une des revendications 8 à 10.

12. Avion (2),
avec un agencement de porte selon l'une des revendications 1 à 7 ou avec une installation de commande et d'information (1) selon l'une des revendications 8 à 10 ou avec l'espace (3) selon la revendication 12.
